# EUROPÄISCHE PATENTSCHRIFT

(11) **EP 3 741 592 B1**
(45) Veröffentlichungstag und Bekanntmachung des Hinweises auf die Patenterteilung: **15.09.2021**
(21) Anmeldenummer: 19175993.5
(22) Anmeldetag: 22.05.2019
(51) Int. Cl.: B60D 5/00, B64F 1/31, B61D 17/22

(54) **BALGELEMENT**
BELLOWS ELEMENT
ÉLÉMENT SOUFFLET

(43) Veröffentlichungstag der Anmeldung: 25.11.2020
(73) Patentinhaber: ULTIMATE Europe Transportation Equipment GmbH, 3300 Amstetten (AT); Teufl, Manfred, 3332 Rosenau (AT)
(72) Erfinder: Teufl, Manfred, 3332 Rosenau (AT)
(74) Vertreter: KLIMENT & HENHAPEL

(56) Entgegenhaltungen:
- EP-A1- 0 631 890
- EP-A1- 1 810 852
- EP-A1- 2 698 266
- GB-A- 2 337 239

## Beschreibung

### GEBIET DER ERFINDUNG

Die Erfindung betrifft ein Balgelement eines Balgs zur Ausbildung eines tunnelförmigen Übergangsschutzes zwischen zwei gelenkig miteinander verbundenen Fahrzeuggliedern, wobei das Balgelement zumindest abschnittsweise ein halbseitig offenes Querschnittsprofil aufweist, welches Querschnittsprofil einen Zentralabschnitt und zwei einander gegenüberliegende vom Zentralabschnitt abragende Seitenabschnitte umfasst, wobei das Balgelement mehrere Rahmenbalgelemente umfasst, welche Rahmenbalgelemente rahmenartig miteinander verbunden sind, wobei zwischen jeweils zwei Rahmenbalgelementen ein die beiden Rahmenbalgelemente entlang einer Längsbogenachse miteinander verbindender Verbindungsbogen ausgebildet ist, wobei die Verbindungsbögen jeweils ein Zentralbogensegment und zwei am Zentralbogensegment befestigte Seitenbogensegmente umfassen, wobei das Zentralbogensegment im Zentralabschnitt des halbseitig offenen Querschnittsprofils verläuft und die zwei Seitenbogensegmente in den Seitenabschnitten verlaufen, wobei sich das Zentralbogensegment und die zwei Seitenbogensegmente in einem zentralen Überlappungsbereich überlappen.

### STAND DER TECHNIK

Übergänge zwischen zwei gelenkig miteinander verbundenen Fahrzeugteilen, seien es beispielsweise Fahrzeugteile von Schienenfahrzeuge oder von Bussen, sind hinreichend bekannt. Üblicherweise wird der Übergang, z.B. eine Brücke oder eine Plattform, von einem Balg umspannt um Personen ein Hinüberwechseln von einem Fahrzeugteil in den anderen Fahrzeugteil zu ermöglichen und sie vor Witterungseinflüssen, Fahrtwind und Lärm zu schützen. Gegebenenfalls umspannt der Balg nicht nur den Übergang, sondern auch eine unter dem Übergang befindliche Gelenkverbindung zwischen den Fahrzeugteilen.

Der Balg umfasst mehrere Balgelemente, beispielsweise Balgwellen oder Balgfalten, die mit Hilfe von Verbindungselementen, z.B. Klemmleisten, miteinander verbunden sind. Solche Balgelemente sind beispielsweise aus dem Dokument EP 0 631 890 A1 bekannt, welches den Oberbegriff des Anspruchs 1 offenbart.

Die Balgelemente selbst umfassen in der Regel vier rahmenartig miteinander verbundene Rahmenbalgelemente, die in Eckbereichen mittels Verbindungsbögen miteinander verbunden sind. Der Verbindungsbogen kann entweder einteilig oder mehrteilig aufgebaut sein.

Bei der einteiligen Variante des Verbindungsbogens wird beispielsweise Kautschuk mit Hilfe einer dreidimensionalen Werkzeugform unter Druck und hoher Temperatur vulkanisiert. Dadurch entsteht ein nahtlos geformter Verbindungsbogen, der allerdings aufwendig und teuer in der Herstellung ist. Zusätzlich sind bei dieser Variante sowohl Abmessungen als auch Formgebungsmöglichkeiten stark begrenzt. D.h. die einteilige Variante kann nicht auf verschiedene Rahmenformen angepasst werden. Außerdem kann es aufgrund unterschiedlicher Materialien zu Steifigkeitssprüngen zwischen den Rahmenbalgelementen und den Verbindungsbögen kommen.

Im Vergleich zur einteiligen Variante zeichnet sich die mehrteilige Variante durch eine höhere Flexibilität bei der Herstellung und bei den möglichen Einsatzgebieten aus. Hierbei setzt sich jeder Verbindungsbogen aus zweidimensionalen Zuschnitten zusammen, welche Zuschnitte gebogen werden und miteinander vernäht sind. Jeder der Verbindungsbögen ist an seinen Enden mit jeweils einem angrenzenden Rahmenbalgelement mit Hilfe von Anschlussnähten verbunden, wobei im Bereich der Anschlussnähte einerseits die Zuschnitte und andererseits das jeweilige Rahmenbalgelement überlappen.

Im Betrieb ist der Balg hohen Belastungen ausgesetzt.

Insbesondere der Querversatz - d.h. die relative Fahrzeugverschiebung der beiden Fahrzeugteile zueinander in horizontaler Ebene quer zur Fahrzeuglängsachse - stellt eine der größten Herausforderungen dar. Der Querversatz führt zu hohen Schubkraftbelastungen, die an den oberen und unteren Bereichen der Balgelemente, insbesondere an den Eckbereichen, ein Umstülpen des Balgelements bewirken, wodurch diese Bereiche besonders beansprucht werden. Zusätzlich zu den hohen Schubkraftbelastungen kommt es durch die Überlappung der Zuschnitte und der Rahmenbalgelemente im Eckbereich im Bereich der Anschlussnähte, die im Vergleich zu den Zuschnitten und im Vergleich zu den Rahmenbalgelementen wesentlich geringere Kräfte aufnehmen können, zu einer Erhöhung der lokalen Biegesteifigkeit und dadurch zu einer erhöhten Biegebeanspruchung der Anschlussnähte während des Umstülpens.

Nachteilig ist, dass an der während des Umstülpens höchstbelasteten Stelle des Balgelements die schwachen Anschlussnähte und die - aufgrund der Überlappung - bis zu dreifache Materialdicke aufeinander treffen. Insbesondere ist dies der Fall, wenn sich die Verbindungsbögen im Verbindungsbereich aus einem Zentralbogensegment und zwei Seitenbogensegmenten zusammensetzen, wobei jeweils ein Seitenbogensegment, das Zentralbogensegment und das entsprechende Rahmenbalgsegment zum Zwecke der Vernähung überlappen. Im Betrieb kommt es dadurch unweigerlich zu einer Beschädigung dieser Nahtverbindungen, wodurch sich die Anschlussnähte lockern und/oder gänzlich lösen können. Dies führt zu undichten Stellen des Balgs, wodurch dieser für verschiedene Medien, wie z.B. Luft und Wasser, durchlässig wird.

### AUFGABE DER ERFINDUNG

Es ist daher eine Aufgabe der Erfindung ein Balgelement zur Verfügung zu stellen, das die Nachteile des Stands der Technik überwindet und die Anbindung der Verbindungsbögen an die Rahmenbalgelemente verbessert, sodass die Dichtheit länger gewährt bleibt und entsprechend eine längere Lebensdauer des Balgelements bzw. eines Balges erreicht wird.

### DARSTELLUNG DER ERFINDUNG

Die eingangs gestellte Aufgabe wird bei einem Balgelement eines Balgs zur Ausbildung eines tunnelförmigen Übergangsschutzes zwischen zwei gelenkig miteinander verbundenen Fahrzeuggliedern, wobei das Balgelement zumindest abschnittsweise ein halbseitig offenes Querschnittsprofil aufweist, welches Querschnittsprofil einen Zentralabschnitt und zwei einander gegenüberliegende vom Zentralabschnitt abragende Seitenabschnitte umfasst, wobei das Balgelement mehrere Rahmenbalgelemente umfasst, welche Rahmenbalgelemente rahmenartig miteinander verbunden sind, wobei zwischen jeweils zwei Rahmenbalgelementen ein die beiden Rahmenbalgelemente entlang einer Längsbogenachse miteinander verbindender Verbindungsbogen ausgebildet ist, wobei die Verbindungsbögen jeweils ein Zentralbogensegment und zwei am Zentralbogensegment befestigte Seitenbogensegmente umfassen, wobei das Zentralbogensegment im Zentralabschnitt des halbseitig offenen Querschnittsprofils verläuft und die zwei Seitenbogensegmente in den Seitenabschnitten verlaufen, wobei sich das Zentralbogensegment und die zwei Seitenbogensegmente in einem zentralen Überlappungsbereich überlappen, erfindungsgemäß dadurch gelöst, dass zumindest einer der Verbindungsbögen ein Zentralbogensegment mit einem endseitig angeordneten Manschettenabschnitt aufweist, wobei sich der Manschettenabschnitt bis in die Seitenabschnitte des halbseitig offenen Querschnittsprofils erstreckt, sodass sich im Manschettenabschnitt zusätzliche seitliche Überlappungsbereiche zwischen den Seitenbogensegmenten und dem Zentralbogensegment ausbilden.

Das erfindungsgemäße Balgelement umfasst vorzugsweise vier Rahmenbalgelemente, die in Eckbereichen mit Hilfe von Verbindungsbögen miteinander verbunden sind, wodurch das erfindungsgemäße Balgelement einen, vorzugsweise im Wesentlichen rechteckig ausgebildeten, Rahmen ausbildet. Selbstverständlich ist es möglich, dass der Rahmen nicht vollständig geschlossen ist. D.h. der Rahmen kann auch offene Bereiche umfassen.

Es sei erwähnt, dass der Begriff bogenförmig im erfindungsgemäßen Zusammenhang nicht auf eine Kreisbogenform beschränkt ist, sondern auch einen Bogen mit einer allgemeinen Kurve als Grundform umfasst, welche Kurve beispielsweise aus einer Gerade mit einzelnen bogenförmigen Abschnitten oder aus einer Mehrzahl an geradlinigen Einzelabschnitten zusammengesetzt sein kann. Dementsprechend kann auch die Längsbogenachse geradlinig verlaufende Abschnitte umfassen. Sowohl die Rahmenbalgelemente als auch die Verbindungsbögen weisen vorzugsweise ein halbseitig offenes Querschnittsprofil auf. Zumindest weisen jedoch in der Regel die Verbindungsbögen und an die Verbindungsbögen angrenzende Abschnitte der Rahmenbalgelemente das halbseitig offene Querschnittsprofil auf. Es ist aber selbstverständlich auch möglich, dass das Balgelement abschnittsweise Bereiche umfasst, in denen kein halbseitig offenes Querschnittsprofil vorhanden ist sondern beispielsweise ein geschlossenes Querschnittsprofil vorhanden ist.

Unter einem halbseitig offenen Querschnittsprofil sind solche Querschnittsprofile zu verstehen, die einen Zentralabschnitt umfassen, welcher zwei vom Zentralabschnitt abragende Seitenabschnitte umfasst, wobei Zentralabschnitt und Seitenabschnitte in der Regel eine konvexe Fläche einschließen. Vorzugsweise ist das halbseitig offene Querschnittsprofil U-förmig ausgebildet, wobei der Bogen des U-Profils den Zentralabschnitt ausbildet und die Seitenabschnitte durch die parallel zueinander verlaufenden Schenkel des U-Profils gebildet werden. Natürlich ist es auch denkbar, dass der Zentralabschnitt spitz zusammenläuft, beispielsweise V-förmig ausgebildet ist, oder dass die Seitenabschnitte nicht parallel zu einander ausgerichtet sind sondern einen Winkel miteinander einschließen.

Es versteht sich dabei von selbst, dass das halbseitig offene Querschnittsprofil, je nachdem an welcher Stelle des Balgelements geschnitten wird, von unterschiedlichen Elementen gebildet wird. So kann das halbseitig offene Querschnittsprofil beispielsweise im Bereich eines Rahmenbalgelements vollständig durch selbiges ausgebildet sein während das halbseitig offene Querschnittsprofil im Bereich eines Verbindungsbogens von Zentralbogensegment und den Seitenbogensegmenten ausgebildet ist. Der Umriss des halbseitig offenen Querschnittsprofils bleibt jedoch in der Regel über alle das Querschnittsprofil aufweisenden Abschnitte im Wesentlichen unverändert.

Es versteht sich dabei von selbst, dass auch ein aus zwei gegengleich zusammengesetzten halbseitig offenen Querschnittsprofilen ausgebildetes Balgelement mit einem dadurch geschlossenen Querschnittsprofil jeweils zwei Abschnitte mit halbseitig offenem Querschnittsprofil umfasst. In diesem Fall sind die Zentralbogensegmente der beiden halbseitig offenen Querschnittsprofile einander gegenüberliegend angeordnet und das eine der beiden halbseitig offenen Querschnittsprofile wird vom anderen der beiden halbseitig offenen Querschnittsprofile aufgenommen. Beispielsweise sind die beiden halbseitig offenen Querschnittsprofile an den Seitenbogensegmenten miteinander vernäht.

Jeder Verbindungsbogen weist ein im Zentralabschnitt des halbseitig offenen Querschnittsprofils angeordnetes Zentralbogensegment und zwei in den Seitenabschnitten angeordnete Seitenbogensegmente auf, wobei die Seitenbogensegmente vom Zentralabschnitt einander gegenüberliegend, vorzugsweise parallel, abragen. In einem zentralen Überlappungsbereich überlappen sich das Zentralbogensegment und die beiden Seitenbogensegmente, um diese miteinander verbinden zu können. D.h. das Zentralbogensegment und die beiden Seitenbogensegmente bilden innerhalb des Verbindungsbogens das Querschnittsprofil aus.

Es wäre vorstellbar, dass der zentrale Überlappungsbereich einen ersten zentralen Überlappungsbereich und einen zweiten zentralen Überlappungsbereich umfasst, wobei im ersten zentralen Überlappungsbereich ein erstes der beiden Seitenbogensegment und das Zentralbogensegment einander überlappen und wobei im zweiten zentralen Überlappungsbereich ein zweites der beiden Seitenbogensegmente und das Zentralbogensegment einander überlappen.

Innerhalb des zentralen Überlappungsbereichs überlappen das Zentralbogensegment und die beiden Seitenbogensegmente. Dabei kann das Zentralbogensegment außenliegend und die beiden Seitenbogensegmente innenliegend angeordnet sein. Alternativ kann das Zentralbogensegment innenliegend und die beiden Seitenbogensegmente außenliegend angeordnet sein. Es wäre allerdings auch möglich, dass eines der beiden Seitenbogensegmente außenliegend und das andere der beiden Seitenbogensegmente innenliegend angeordnet ist. Dementsprechend ist das Zentralbogensegment im Bereich des außenliegenden Seitenbogensegments innenliegend angeordnet und im Bereich des innenliegenden Seitenbogensegments außenliegend angeordnet.

In der Regel dient der zentrale Überlappungsbereich zur Anbindung des Zentralbogensegments an die beiden Seitenbogensegmente, vorzugsweise mittels entsprechender Verbindungsmittel.

Das Zentralbogensegment von zumindest einem der Verbindungsbögen weist an einem Ende den Manschettenabschnitt auf, der sich über den Zentralabschnitt in die Seitenabschnitte des halbseitig offenen Querschnittsprofils erstreckt. Innerhalb der Seitenabschnitte ergeben sich dadurch zusätzliche seitliche Überlappungsbereiche, in welchen die Seitenbogensegmente und das Zentralbogensegment einander überlappen. Dabei kann das Zentralbogensegment außenliegend und die beiden Seitenbogensegmente innenliegend angeordnet sein. Alternativ kann das Zentralbogensegment innenliegend und die beiden Seitenbogensegmente außenliegend angeordnet sein.

Es wäre allerdings auch möglich, dass in einem seitlichen Überlappungsbereich eines der beiden Seitenbogensegmente außenliegend und das Zentralbogensegment innenliegend angeordnet ist, während im anderen seitlichen Überlappungsbereich das Seitenbogensegment innenliegend und das Zentralbogensegment außenliegend angeordnet ist.

Der endseitig angeordnete Manschettenabschnitt bildet in der Regel den Abschluss des Zentralbogensegments und stellt somit einen Übergang zu einem der angrenzenden Rahmenbogenelemente dar.

Zusammengefasst kann festgehalten werden, dass sich im Manschettenabschnitt das Zentralbogensegment und die Seitenbogensegmente überlappen und dabei berühren.

Durch den Manschettenabschnitt werden zusätzliche seitliche Überlappungsbereiche ausgebildet, durch welche das Zentralbogensegment und die Seitenbogensegmente gut verbindbar sind, da die Überlappung in den Seitenabschnitten des halbseitig offenen Querschnittsprofils zusätzliche Fläche zur Anbringung von Verbindungsmitteln für die Anbindung der Seitenbogensegmente an das Zentralbogensegment zur Verfügung stellt, welche gegebenenfalls zur Anpassung des Verlaufs der Verbindungsmitteln genützt werden kann. Darüberhinaus kann die Anbindung der Seitenbogensegmente an das Zentralbogensegment nun auch im Bereich der Seitenabschnitte erfolgen, sodass keine Verbindungsmittel in jenem Bereich des Verbindungsbogens angeordnet sein müssen, in denen es durch das Umstülpen zu besonders hohen Belastungen kommt.

Der Manschettenabschnitt ist mit den Seitenbogensegmenten, sowie gegebenenfalls mit einem der Rahmenbalgelemente, mit Hilfe von Verbindungsmitteln verbunden. Als Verbindungsmittel kommen beispielsweise die entsprechenden Verbindungselemente bei den Verbindungsverfahren Nähen, Kleben oder auch Kunststoffschweißen in Frage. Selbstverständlich können auch unterschiedliche Verbindungsmittel miteinander kombiniert werden.

Vorteilhaft ist, dass - bezogen auf das Querschnittsprofil - durch die Verwendung des Manschettenabschnitts die Dicke der Überlappungsbereiche reduziert wird, da sich im Bereich des Manschettenabschnitts jeweils lediglich zwei Teile des erfindungsgemäßen Balgelements überlappen. D.h. durch den Manschettenabschnitt wird die Verbindung zwischen dem Verbindungsbogen und dem Rahmenbalgelement optimiert.

Es wäre vorstellbar, dass der Manschettenabschnitt des Zentralbogensegments und eines der angrenzenden Rahmenbalgelemente einander überlappen. In diesem Fall ist es vorteilhaft, wenn die Anbindung des Verbindungsbogens durch Anbindung des Manschettenabschnitts an das Rahmenbalgelement im überlappenden Bereich hergestellt ist, vorzugsweise mittels entsprechender Verbindungsmittel.

Es wäre aber auch möglich, dass eine Abschlusskante des Zentralbogensegments und eine Abschlusskante eines der Rahmenbalgelemente im Manschettenabschnitt, vorzugsweise vollumfänglich, aneinanderstoßen. D.h. in diesem Fall wäre es auch möglich, dass das Zentralbogensegment und das Rahmenbalgelement einstückig ausgebildet sind, wodurch die auftretenden Schubkraftbelastungen direkt vom Rahmenbalgelement auf den Verbindungsbogen übertragen werden.

Die Herstellung der Verbindungsbögen des erfindungsgemäßen Balgelements ist kostengünstig und kann bei gleichbleibender Konfektionierbarkeit an unterschiedliche Rahmenformen angepasst werden.

In einer weiteren Ausführungsvariante der Erfindung ist vorgesehen, dass der Manschettenabschnitt einen Endabschnitt der Seitenbogensegmente vollständig überdeckt. D.h. der Manschettenabschnitt erstreckt sich sowohl in Richtung der Längsbogenachse gesehen als auch in einer Querrichtung dazu. In anderen Worten weist der Manschettenabschnitt zumindest abschnittsweise, insbesondere in jenem Bereich in welchem die Seitenbogensegmente vollständig überdeckt werden, das gesamte halbseitig offene Querschnittsprofil auf. Durch die vollständige Überdeckung der Seitenbogensegmente durch den Manschettenabschnitt des Zentralbogensegments wird die Fläche der zusätzlichen seitlichen Überdeckungsbereiche maximiert, sodass Zentralbogensegment und Seitenbogensegmente im Manschettenabschnitt bestmöglich miteinander verbunden werden können.

Erstreckt sich der Manschettenabschnitt in Längsbogenrichtung über die Endabschnitte der Seitenbogensegmente hinaus, so eignet sich dieser überstehende Bereich insbesondere zur Anbindung an das angrenzende Rahmenbalgelement mittels entsprechender Verbindungsmittel, vorzugsweise mittels Verbindungsnähte.

In einer weiteren Ausführungsvariante der Erfindung ist vorgesehen, dass zumindest in den zusätzlichen seitlichen Überlappungsbereichen bezogen auf das halbseitig offenen Querschnittsprofil das Zentralbogensegment außenliegend angeordnet ist und die Seitenbogensegmente innenliegend angeordnet sind. Die Seitenbogensegmente sind somit im Manschettenabschnitt aufgenommen. So kann beispielsweise bei zumindest einem, bei zwei, drei oder gegebenenfalls bei allen, insbesondere bei allen vier, der Verbindungsbögen des erfindungsgemäßen Balgelements das jeweilige Zentralbogensegment außenliegend angeordnet und die jeweiligen Seitenbogensegmente innenliegend angeordnet sein

Es ist vorteilhaft, wenn zumindest bei einem, vorzugsweise bei den beiden, der in Schwerkraftrichtung gesehen am erfindungsgemäßen Balgelement oben angeordneten Verbindungsbögen das jeweilige Zentralbogensegment außenliegend angeordnet ist und die jeweiligen Seitenbogensegmente innenliegend angeordnet sind. Bei zumindest einem, vorzugsweise bei den beiden, den oben angeordneten Verbindungsbögen gegenüberliegenden Verbindungsbögen, welche in Schwerkraftrichtung gesehen am erfindungsgemäßen Balgelement unten angeordneten sind, kann in diesem Fall das jeweilige Zentralbogensegment innenliegend angeordnet und die jeweiligen Seitenbogensegmente außenliegend angeordnet sein.

Es ist selbstverständlich auch vorstellbar, dass in alternativen Ausführungsvarianten zumindest in den zusätzlichen seitlichen Überlappungsbereichen bezogen auf das halbseitig offenen Querschnittsprofil das Zentralbogensegment innenliegend angeordnet ist und die Seitenbogensegmente außenliegend angeordnet sind. So kann beispielsweise bei zumindest einem, bei zwei, drei oder gegebenenfalls bei allen, insbesondere bei allen vier, der Verbindungsbögen des erfindungsgemäßen Balgelements das jeweilige Zentralbogensegment innenliegend angeordnet und die jeweiligen Seitenbogensegmente außenliegend angeordnet sein. Insbesondere ist eine solche Anordnung vorteilhaft, wenn zumindest einer, vorzugsweise beide, der Verbindungsbögen welche in Schwerkraftrichtung gesehen am erfindungsgemäßen Balgelement unten angeordneten sind, entsprechend ausgebildet sind.

Durch die zuvor beschriebenen unterschiedlichen Anordnungen können das Zentralbogensegment und die Seitenbogensegmente, beispielsweise in Abhängigkeit des Designs des Balges oder in Abhängigkeit der Anordnung des entsprechenden Verbindungsbogens relativ zu den Fahrzeugteilen in der Betriebsposition, bestmöglich verbunden werden und die Dichtheit des erfindungsgemäßen Balgelements, beispielsweise gegen Wasser und/oder Luft, gewährleistet werden.

In einer weiteren Ausführungsvariante der Erfindung ist vorgesehen, dass die Seitenbogensegmente mit dem Zentralbogensegment vernäht sind, wobei jeweils zumindest eine Verbindungsnaht von einem der zusätzlichen seitlichen Überlappungsbereiche in den zentralen Überlappungsbereich verläuft.

Nähte stellen für das erfindungsgemäße Balgelement die bestmögliche Verbindungsart dar, da sie langlebig, strapazierfähig und kostengünstig sind.

Aufgrund des Manschettenabschnitts ist es möglich, dass jeweils eine durchgehende Verbindungsnaht von einem der zusätzlichen seitlichen Überlappungsbereiche in den zentralen Überlappungsbereich verläuft. Dadurch ist das erfindungsgemäße Balgelement langlebiger, da in den höchstbelasteten Bereichen des entsprechenden Verbindungsbogens die Anzahl der Nähte reduziert wird und durch den Nahtverlauf eine Kreuzung von Nähten vermieden werden kann. Besonders vorteilhaft ist es dabei, wenn der Manschettenabschnitt einen Endabschnitt der Seitenbogensegmente vollständig überdeckt, da in diesem Fall eine durchgehende Verbindungsnaht über den gesamten Seitenabschnitt des halbseitig offenen Querschnittsprofils verlaufend angeordnet sein kann. Selbstverständlich ist es auch möglich, dass die Nähte zur Vereinfachung eines Vernähens bzw. eines Nähprozesses auch gekreuzt verlaufen können, wenn die durchgehende Verbindungsnaht vom zusätzlichen seitlichen Überlappungsbereich in den zentralen Überlappungsbereich verläuft.

Es sei gesagt, dass das erfindungsgemäße Balgelement natürlich auch weitere Nähte aufweisen kann, die beispielsweise nur im zentralen Überlappungsbereich verlaufen oder quer zur Längsbogenachse verlaufen.

Selbstverständlich wäre es auch vorstellbar, dass die Seitenbogensegmente mit dem Zentralbogensegment anders miteinander verbunden sind. Hierfür kommen beispielsweise Kleben oder Schweißen in Frage.

In einer weiteren Ausführungsvariante der Erfindung ist vorgesehen, dass eines der Rahmenbalgelemente und das Zentralbogensegment einstückig ausgebildet sind, wobei der Manschettenabschnitt durch das Rahmenbalgelement ausgebildet ist. D.h. das Zentralbogensegment sowie das Rahmenbalgelement bestehen aus einem Teil und sind vorzugsweise einstückig gefertigt. Mit anderen Worten geht ein Endabschnitt des Rahmenbalgelements in das Zentralbogensegment über.

Dies ist besonders vorteilhaft, da durch die einstückige Ausbildung von Rahmenbalgelement und Zentralbogensegment die Nähte zwischen dem Rahmenbalgelement und dem Zentralbogensegment entfallen. D.h. das Rahmenbalgelement und das Zentralbogensegment müssen nachträglich nicht miteinander verbunden werden, sodass ein zeitintensiver Fertigungsschritt entfällt. Dadurch ist das erfindungsgemäße Balgelement besonders langlebig und dicht bzw. lässt sich kostengünstiger herstellen. Auch stärkt die einstückige Ausbildung die Robustheit des Verbindungsbogens und sorgt dafür, dass die Rahmenbalgelemente über das von einem der Rahmenbalgelemente ausgebildete Zentralbogensegment direkt miteinander verbunden sind.

Weiters findet bei der einstückigen Ausbildung eine direkte Schubkraftübertragung vom Rahmenbalgelement auf den Verbindungsbogen statt, da ein zusätzliches Zwischenelement nicht notwendig ist. Es wäre vorstellbar, dass beim erfindungsgemäßen Balgelement auf einer Breite von 50 mm eine Kraft von 5000 N übertragen werden kann. Daraus ergeben sich eine deutlich bessere Dauerfestigkeit und eine längere Lebensdauer.

Zusätzlich kann bei der einstückigen Ausbildung der Materialeinsatz optimiert werden, wodurch Ressourcen und Kosten gespart werden können.

In einer weiteren Ausführungsvariante der Erfindung ist vorgesehen, dass die Rahmenbalgelemente und das Zentralbogensegment mehrstückig ausgebildet sind, wobei sich zumindest eines der Rahmenbalgelemente und das Zentralbogensegment überlappen.

Durch die mehrstückige Ausbildung der Rahmenbalgelemente und des Zentralbogensegments gestaltet sich deren Fertigung einfach und kostengünstig. Darüber hinaus können die erfindungsgemäßen Vorteile mit herkömmlichen Rahmenbalgelementen in einfacher Art und Weise erreicht werden, da lediglich die herkömmlichen Zentralbogensegmente durch die entsprechenden Zentralbogensegmente mit Manschettenabschnitt ersetzt werden müssen.

In einer weiteren Ausführungsvariante der Erfindung ist vorgesehen, dass im Manschettenabschnitt bezogen auf das halbseitig offene Querschnittsprofil eines der Rahmenbalgelemente außenliegend angeordnet ist und das Zentralbogensegment innenliegend angeordnet ist. Somit ist der Manschettenabschnitt des Zentralbogensegments vom Rahmenbalgelement aufgenommen.

Durch diese Anordnung können das Zentralbogensegment und das Rahmenbalgelement bestmöglich verbunden werden und die Dichtheit des erfindungsgemäßen Balgelements, beispielsweise gegen Wasser und/oder Luft, ist gewährleistet.

In einer weiteren Ausführungsvariante der Erfindung ist vorgesehen, dass das den endseitig angeordneten Manschettenabschnitt aufweisende Zentralbogensegment einen weiteren endseitigen Manschettenabschnitt aufweist, welcher weitere Manschettenabschnitt weitere zusätzliche seitliche Überlappungsbereiche ausbildet, wobei der Manschettenabschnitt und der weitere Manschettenabschnitt entlang der Längsbogenachse gesehen an einander entgegengesetzten Enden angeordnet sind. D.h. das Zentralbogensegment weist an zwei einander gegenüberliegenden Enden einen Manschettenabschnitt auf.

Durch die Verwendung von zwei Manschettenabschnitten wird die Verbindung des Zentralbogensegments an die beiden angrenzenden Rahmenbalgelemente verbessert.

An beiden Enden des Zentralbogensegments entlang der Längsbogenachse gesehen kann durch die Manschettenabschnitte die Anzahl der Nähte reduziert werden, wodurch die Lebensdauer und die Dichtheit des erfindungsgemäßen Balgelements erhöht werden.

Es wäre auch in dieser Ausführungsvariante vorstellbar, dass eines der Rahmenbalgelemente und das Zentralbogensegment einstückig gefertigt sind. Dadurch kann die Anzahl der Nähte auf ein Minimum reduziert werden. Weiters werden die auftretenden Schubkraftbelastungen im Falle der einstückigen Ausbildung direkt vom Rahmenbalgelement auf den Verbindungsbogen übertragen.

Selbstverständlich können die Rahmenbalgelemente und das Zentralbogensegment aber auch mehrstückig gefertigt sein.

In einer weiteren Ausführungsvariante der Erfindung ist vorgesehen, dass die Seitenbogensegmente mit dem Zentralbogensegment vernäht sind, wobei jeweils zumindest eine Verbindungsnaht von einem der zusätzlichen seitlichen Überlappungsbereiche über den zentralen Überlappungsbereich in einen der weiteren zusätzlichen Überlappungsbereiche verläuft.

Wie bereits oben erwähnt, stellen Nähte für das erfindungsgemäße Balgelement die bestmögliche Verbindungsart dar, da sie langlebig, strapazierfähig und kostengünstig sind.

Aufgrund der beiden Manschettenabschnitte ist es möglich, dass jeweils eine durchgehende Verbindungsnaht von einem der zusätzlichen seitlichen Überlappungsbereiche über den zentralen Überlappungsbereich in einen der weiteren zusätzlichen seitlichen Überlappungsbereiche verläuft. Dadurch ist das erfindungsgemäße Balgelement besonders langlebig, da in den höchstbelasteten Bereichen des erfindungsgemäßen Balgelements die Anzahl der Nähte auf ein Minimum reduziert wird.

Es versteht sich von selbst, dass das erfindungsgemäße Balgelement natürlich auch weitere Nähte aufweisen kann.

Es ist selbstverständlich auch in dieser Ausführungsvariante, in welcher das Zentralbogensegment zwei Manschettenabschnitte aufweist, nicht ausgeschlossen, dass die Seitenbogensegmente mit dem Zentralbogensegment anders miteinander verbunden sind. Hierfür kommen beispielsweise Kleben oder Schweißen in Frage.

In einer weiteren Ausführungsvariante der Erfindung ist vorgesehen, dass die Rahmenbalgelemente, das zumindest eine Zentralbogensegment und die Seitenbogensegmente jeweils ein mit einem Elastomer beschichtetes Gewebe umfassen.

Die Verwendung zumindest eines Elastomers für die Rahmenbalgelemente, das zumindest eine Zentralbogensegment und die Seitenbogensegmente ist besonders vorteilhaft, da Elastomere gut verformbar sind und nach einer Verformung wieder ihre ursprüngliche Form einnehmen. Zusätzlich sind sie resistenter gegenüber einer Materialermüdung, gut wiederverwertbar und kostengünstig. Weiters zeichnen sich Elastomere durch Witterungsbeständigkeit und gutes Tieftemperaturverhalten aus.

In einer weiteren Ausführungsvariante der Erfindung ist vorgesehen, dass es sich bei dem Elastomer um chlorsulfoniertes Polyethylen (CSM) oder um Silikone handelt.

Chlorsulfoniertes Polyethylen (CSM) ist ein hochelastischer Werkstoff und verleiht dem erfindungsgemäßen Balgelement hohe Widerstandsfestigkeit gegenüber äußeren Einflüssen, wie Feuchte, Witterung oder chemische Aggressionen.

In einer weiteren Ausführungsvariante der Erfindung ist vorgesehen, dass eine Abschlusskante des Manschettenabschnitts und eine Tangente der Längsbogenachse einen Winkel von zwischen 45° und 135°, bevorzugt von zwischen 90° und 120°, einschließen.

Bei den Abschlusskanten des Manschettenabschnitts handelt es sich um jene Kanten, die den Übergang vom Manschettenabschnitt zu den Seitenbogensegmenten bilden. In anderen Worten begrenzen die Abschlusskanten die zusätzlichen seitlichen Überlappungsbereiche des Manschettenabschnitts auf der dem angrenzenden Rahmenbogenelement abweisenden Seite des Manschettenabschnitts.

Der Winkel zwischen der Abschlusskante des Manschettenabschnitts und der Tangente der Längsbogenachse wird abhängig vom Einsatzbereich des erfindungsgemäßen Balgelements gewählt, um die Eigenschaften des erfindungsgemäßen Balgelements an den Einsatzbereich anzupassen. Insbesondere kann der Winkel an den Verlauf eines Verbindungsmittels, insbesondere einer Verbindungsnaht, angepasst sein, um etwaige Materialüberschüsse vermeiden zu können.

Durch die entsprechende Einstellung des Winkels für den jeweiligen Anlassfall kann die Übertragung der Schubkraftbelastungen im Verbindungsbogen optimiert werden.

Grundsätzlich wurde festgestellt, dass Winkel über 90° die Übertragung der Schubkraftbelastung besonders verbessern, da es zu keiner abrupten Richtungsänderung der Verbindungsnaht, welche in der Regel parallel zur Längsbogenachse verläuft, kommt und diese im Manschettenabschnitt gleichmäßig bis zum Endabschnitt auslaufen kann.

Während es grundsätzlich denkbar ist, dass die beiden Abschlusskanten der jeweiligen Arme des Manschettenabschnitts unterschiedliche Winkel mit der Tangente der Längsbogenachse einschließen ist es bevorzugt, wenn der Winkel auf beiden Seiten gleich groß ist.

In diesem Zusammenhang sei erwähnt, dass die Längsbogenachse selbstverständlich auch geradlinig verlaufende tangentiale Abschnitte umfassen kann.

In einer weiteren Ausführungsvariante der Erfindung ist vorgesehen, dass die Rahmenbalgelemente, das zumindest eine Zentralbogensegment und die Seitenbogensegmente, vorzugsweise mit Nähfäden aus Polyamid (PA), vernäht sind.

Nähfäden aus Polyamid sind belastbar, reißbeständig und trotzdem flexibel sowie resistent gegenüber Materialermüdung. Aus diesen Gründen eignen sie sich besonders gut für die Anwendung bei erfindungsgemäßen Balgelementen.

In einer weiteren Ausführungsvariante der Erfindung ist vorgesehen, dass zumindest zwei an ein Rahmenbalgelement angrenzende Verbindungsbögen, vorzugsweise genau zwei oder alle vier Verbindungsbögen des Balgelements, jeweils ein Zentralbogensegment mit zumindest einem endseitig angeordneten Manschettenabschnitt aufweisen.

Es wäre vorstellbar, dass das die zwei oberen Verbindungsbögen des erfindungsgemäßen Balgelements jeweils ein Zentralbogensegment mit einem endseitig angeordneten Manschettenabschnitt oder mit zwei endseitig angeordneten Manschettenabschnitten, wovon einer der weitere Manschettenabschnitt ist, aufweisen. Natürlich können auch die beiden unteren Verbindungsbögen des erfindungsgemäßen Balgelements jeweils ein Zentralbogensegment mit einem oder zwei endseitig angeordneten Manschettenabschnitten aufweisen. Vorzugsweise weisen jedoch alle vier Verbindungsbögen des erfindungsgemäßen Balgelements jeweils ein Zentralbogensegment mit einem oder zwei endseitig angeordneten Manschettenabschnitten auf. Die letzte Variante ist besonders zu bevorzugen, da sowohl Lebensdauer als auch Dichtheit des erfindungsgemäßen Balgelements maximiert werden.

Selbstverständlich kann auch in dieser Ausführungsvariante jeder Verbindungsbogen neben dem endseitig angeordneten Manschettenabschnitt einen weiteren Manschettenabschnitt umfassen.

Gemäß dem oben Gesagten ist erfindungsgemäß ein Balg zur Ausbildung eines tunnelförmigen Übergangsschutzes zwischen zwei gelenkig miteinander verbundenen Fahrzeuggliedern vorgesehen, welcher Balg mehrere Balgelemente aufweist, wobei jeweils zwei aneinandergrenzende Balgelemente miteinander mittels Verbindungselementen verbunden sind. Solch ein Balg ist besonders widerstandsfähig gegenüber Schubkraftbelastungen und weist eine hohe Dichtheit und Lebensdauer auf. Sofern nicht alle Verbindungsbögen ein erfindungsgemäßes Zentralbogensegment mit zumindest einem Manschettenabschnitt aufweisen ist es vorteilhaft, wenn die das Zentralbogensegment mit zumindest einem Manschettenabschnitt aufweisenden Verbindungsbögen aller Balgelemente an der gleichen Relativposition des Balges angeordnet sind. So sind beispielsweise alle das Zentralbogensegment mit zumindest einem Manschettenabschnitt aufweisenden Verbindungsbögen im rechten oberen Eckbereich oder im rechten oberen und im linken oberen Eckbereich angeordnet.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1a: eine axonometrische Darstellung eines Ausschnittes einer Außenseite eines Balgelements gemäß dem Stand der Technik;
- Fig. 1b: eine Seitenansicht des Balgelements gemäß dem Stand der Technik;
- Fig. 1c: eine Schnittansicht eines Querschnittsprofils der Verbindung eines oberen Rahmenbalgelements mit einem Zentralbogensegment und mit Seitenbogensegmenten des Balgelements gemäß dem Stand der Technik aus Fig. 1b gemäß der in Fig. 1b eingezeichneten Schnittlinie A-A;
- Fig. 2a: eine axonometrische Darstellung der Außenseite eines Ausschnittes einer ersten Ausführungsvariante eines erfindungsgemäßen Balgelements;
- Fig. 2b: eine axonometrische Darstellung einer Innenseite des Ausschnittes der ersten Ausführungsvariante des erfindungsgemäßen Balgelements;
- Fig. 2c: eine Seitenansicht der ersten Ausführungsvariante des erfindungsgemäßen Balgelements;
- Fig. 2d: eine Schnittansicht eines Querschnittsprofils der Verbindung des oberen Rahmenbalgelements mit einem Manschettenabschnitts des Zentralbogensegments der ersten Ausführungsvariante des erfindungsgemäßen Balgelements aus Fig. 2c gemäß der in Fig. 2c eingezeichneten Schnittlinie B-B;
- Fig. 2e: eine Schnittansicht des Querschnittsprofils der Verbindung des Manschettenabschnitts des Zentralbogensemgents mit den Seitenbogensegmenten der ersten Ausführungsvariante des erfindungsgemäßen Balgelements aus Fig. 2c gemäß der in Fig. 2c eingezeichneten Schnittlinie C-C;
- Fig. 2f: eine Schnittansicht des Querschnittsprofils der Verbindung des zentralen Bogensemgents mit den Seitenbogensegmenten der ersten Ausführungsvariante des erfindungsgemäßen Balgelements aus Fig. 2c gemäß der in Fig. 2c eingezeichneten Schnittlinie D-D;
- Fig. 2g: eine Schnittansicht des Querschnittsprofils der Verbindung eines seitlichen Rahmenbalgelements mit dem Zentralbogensegment und mit den Seitenbogensegmenten der ersten Ausführungsvariante des erfindungsgemäßen Balgelements aus Fig. 2c gemäß der in Fig. 2c eingezeichneten Schnittlinie E-E;
- Fig. 3: eine axonometrische Darstellung eines Ausschnittes der Außenseite einer zweiten Ausführungsvariante des erfindungsgemäßen Balgelements;
- Fig. 4a: eine axonometrische Darstellung eines Ausschnittes der Außenseite einer dritten Ausführungsvariante des erfindungsgemäßen Balgelements;
- Fig. 4b: eine axonometrische Darstellung eines Ausschnittes der Innenseite der dritten Ausführungsvariante des erfindungsgemäßen Balgelements;
- Fig. 4c: eine Seitenansicht der dritten Ausführungsvariante des erfindungsgemäßen Balgelements;
- Fig. 4d: eine Schnittansicht des Querschnittsprofils der Verbindung eines weiteren Manschettenabschnitts des Zentralbogensegments mit den Seitenbogensegmenten der dritten Ausführungsvariante des erfindungsgemäßen Balgelements aus Fig. 4c gemäß der in Fig. 4c eingezeichneten Schnittlinie F-F;
- Fig. 4e: eine Schnittansicht des Querschnittsprofils der Verbindung des weiteren Manschettenabschnitts des Zentralbogensegments mit dem Rahmenbalgelement der dritten Ausführungsvariante des erfindungsgemäßen Balgelements aus Fig. 4c gemäß der in Fig. 4c eingezeichneten Schnittlinie G-G;
- Fig. 5: eine axonometrische Darstellung eines Ausschnittes der Außenseite einer vierten Ausführungsvariante des erfindungsgemäßen Balgelements;
- Fig. 6: eine axonometrische Darstellung eines Balgs umfassend mehrere erfindungsgemäße Balgelemente.

### WEGE ZUR AUSFÜHRUNG DER ERFINDUNG

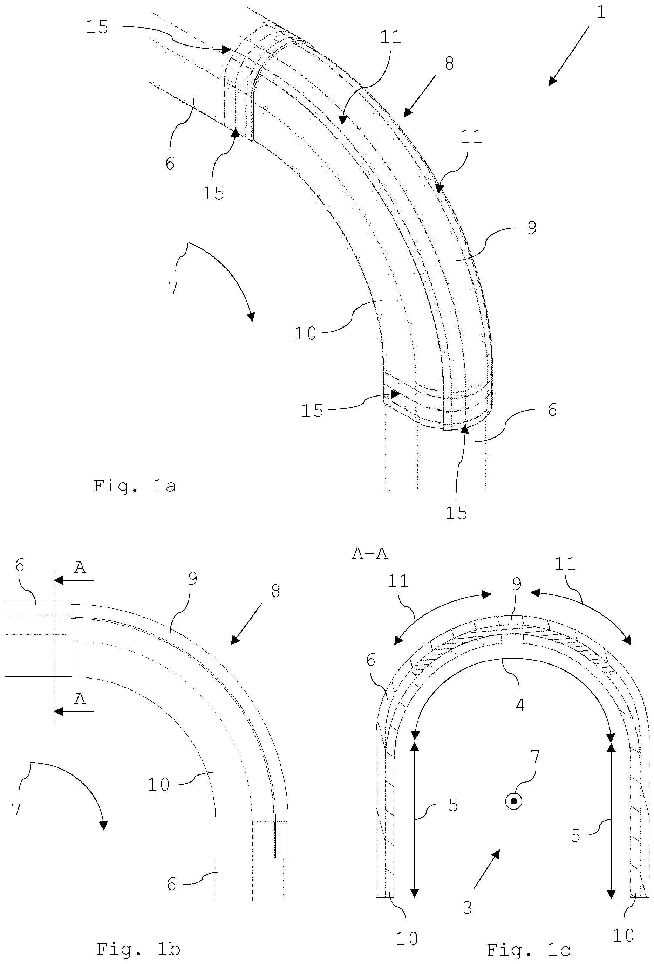

Fig. 1a zeigt eine axonometrische Darstellung eines Ausschnittes einer Außenseite eines im Wesentlichen rechteckig ausgebildeten Balgelements 1 gemäß dem Stand der Technik. Das Balgelement 1 umfasst vier Rahmenbalgelemente 6, wobei jeweils zwei Rahmenbalgelemente 6 - wie im in Fig. 1a gezeigten Ausschnitt dargestellt - mit einem Verbindungsbogen 8 verbunden sind, welcher Verbindungsbogen 8 entlang einer Längsbogenachse 7 verläuft und sich aus einem in einem Zentralabschnitt 4 eines halbseitig offenen Querschnittsprofils 3 (siehe u.a. Fig. 1c) angeordneten Zentralbogensegment 9 und zwei in Seitenabschnitten 5 des Querschnittsprofils 3 angeordneten Seitenbogensegmenten 10 zusammensetzt. Im dargestellten Ausschnitt sind ein oberes Rahmenbalgelement 6 und ein seitliches Rahmenbalgelement 6 dargestellt, welche durch den entsprechenden Verbindungsbogen 8 miteinander verbunden sind.

In einem zentralen Überlappungsbereich 11 überlappen sich das Zentralbogensegment 9 sowie die zwei Seitenbogensegmente 10 und sind miteinander vernäht. Jedes der beiden Seitenbogensegmente 10 ist mit jeweils zwei Nähten 15, die parallel zur Längsbogenachse 7 verlaufen, mit dem Zentralbogensegment 9 vernäht.

An beiden Enden des Verbindungsbogens 8 überlappen eines der Rahmenbalgelemente 6 und das Zentralbogensegment 9 sowie die beiden Seitenbogensegmente 10, wobei jedes der Rahmenbalgelemente 6 und das Zentralbogensegment 9 gemeinsam mit den beiden Seitenbogensegmenten 10 durch jeweils drei Nähten 15, die quer zur Längsbogenachse 7 verlaufen, verbunden ist.

Fig. 1b zeigt eine Seitenansicht des Balgelements 1 gemäß dem Stand der Technik, während Fig. 1c eine Schnittansicht eines Querschnittsprofils 3 der Verbindung des oberen Rahmenbalgelements 6 mit dem Zentralbogensegment 9 und mit den Seitenbogensegmenten 10 des Balgelements 1 gemäß dem Stand der Technik aus Fig. 1b gemäß der in Fig. 1b eingezeichneten Schnittlinie A-A darstellt. In Fig. 1c ist erkennbar, dass das obere Rahmenbalgelement 6 außenliegend angeordnet ist und die beiden Seitenbogensegmente 10 innenliegend angeordnet sind. Dazwischen liegt im Zentralabschnitt 4 das Zentralbogensegment 9.

Sowohl die Rahmenbalgelemente 6 als auch die Verbindungsbögen 8 weisen das halbseitig offene, im vorliegenden Beispiel U-förmige, Querschnittsprofil 3 auf, wobei ein Bogen des U-förmigen Querschnittsprofils 3 den Zentralabschnitt 4 ausbildet und die Seitenabschnitte 5 durch parallel zueinander verlaufenden Schenkel des U-Profils gebildet werden.

Der zentrale Überlappungsbereich 11 besteht aus einem ersten, im vorliegenden Beispiel rechts angeordneten, Überlappungsbereich 11 und einem zweiten, im vorliegenden Beispiel links angeordneten, Überlappungsbereich 11, wobei in jedem der beiden Überlappungsbereiche 11 eines der Seitenbogensegmente 10 mit dem Zentralbogensegment 9 verbunden ist. Entsprechende parallel zur Längsbogenachse 7 verlaufende Nähte 15 sind in Fig. 1a zu erkennen.

Weiters ist erkennbar, dass sich im Zentralabschnitt 4 drei Teile des Balgelements 1 überlappen - nämlich das obere Rahmenbalgelement 6, das Zentralbogensegment 9 und die Seitenbogensegmente 10. Aus der Zusammenschau mit Fig. 1a ist ersichtlich, dass im in Fig. 1c dargestellten Schnittbereich sowohl in Längsbogenrichtung 7 verlaufende als auch quer zur Längsbogenrichtung 7 verlaufende Nähte 15 angeordnet sind, die einander kreuzen und abschnittsweise jeweils drei Materialschichten, nämlich die des oberen Rahmenbalgelements 6, des Zentralbogensegments 9 und der Seitenbogensegmente 10, miteinander verbinden müssen. In gleicher Art und Weise ist auch das seitliche Rahmenbalgelement 6 mit dem Verbindungsbogen 8 verbunden, wie aus dem entsprechenden Verlauf der Nähte 15 in Fig. 1a zu erkennen ist.

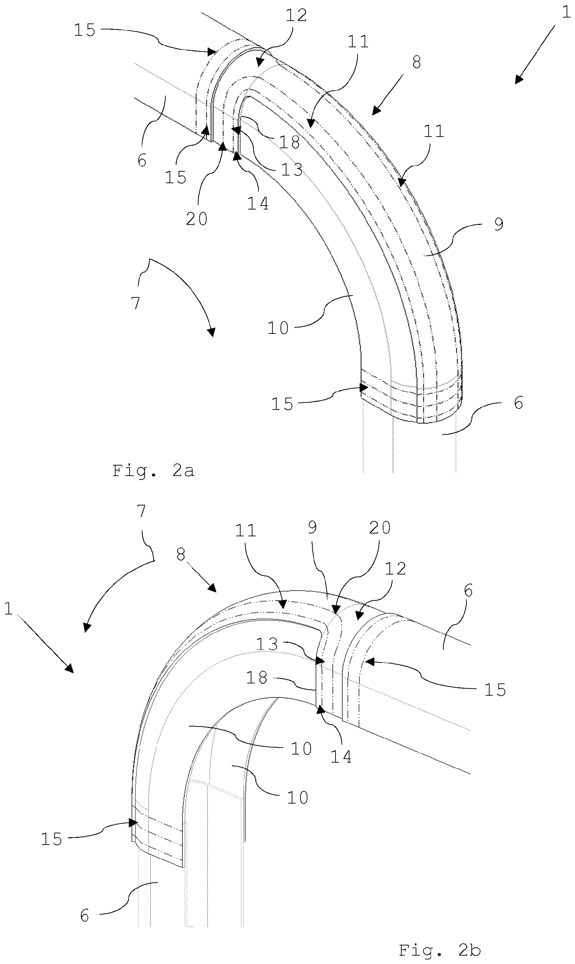

Fig. 2a zeigt eine axonometrische Darstellung der Außenseite eines Ausschnittes einer ersten Ausführungsvariante eines erfindungsgemäßen Balgelements 1, während Fig. 2b eine axonometrische Darstellung einer Innenseite des Ausschnittes der ersten Ausführungsvariante des erfindungsgemäßen Balgelements 1 darstellt. Der Aufbau des erfindungsgemäßen Balgelements 1 entspricht dem Aufbau des Balgelements 1 gemäß dem Stand der Technik mit dem Unterschied, dass das Zentralbogensegment 9 an einem Ende einen Manschettenabschnitt 12 aufweist. Wiederum ist lediglich ein Ausschnitt dargestellt, der ein oberes Rahmenbalgelement 6, ein seitliches Rahmenbalgelement 6 und den die Rahmenbalgelemente 6 verbindenden Verbindungsbogen 8. Es versteht sich von selbst, dass der nachfolgend beschriebene Aufbau unabhängig davon ist, ob untere Rahmenbalgelemente 6 oder obere Rahmenbalgelemente 6 mit seitlichen Rahmenbalgelementen 6 verbunden sind. Ebenso ist es möglich, dass nicht nur einer der Verbindungsbögen 8 ein Zentralbogensegment 8 mit Manschettenabschnitt 12 umfasst, sondern dass zwei, drei oder alle vier Verbindungsbögen 8 ein Zentralbogensegment 8 mit Manschettenabschnitt 12 umfassen.

Der Manschettenabschnitt 12 erstreckt sich in Richtung der Längsbogenachse 7 bis in einen Endabschnitt 14 der Seitenbogensegmente 10 und quer zur Längsbogenachse 7 bis in die Seitenabschnitte 5 des, im gegenständlichen Ausführungsbeispiel U-förmigen, Querschnittsprofils 3, wodurch sich im Manschettenabschnitt 12 - im Vergleich zum Stand der Technik zusätzliche - seitliche Überlappungsbereiche 13 zwischen den Seitenbogensegmenten 10 und dem Zentralbogensegment 9 ausbilden.

Die Rahmenbalgelemente 6, das Zentralbogensegment 9 und die Seitenbogensegmente 10 umfassen jeweils ein mit einem Elastomer, vorzugsweise mit chlorsulfoniertem Polyethylen, beschichtetes Gewebe. Dies gilt selbstverständlich auch für die nicht dargestellten Rahmenbalgelemente 6 und Verbindungsbögen 8.

In den seitlichen Überlappungsbereichen 13 überlappen das Zentralbogensegment 9 und die Seitenbogensegmente 10, wobei das Zentralbogensegment 9 außenliegend und die Seitenbogensegmente 10 innenliegend angeordnet sind. Im vorliegenden Ausführungsbeispiel sind die Seitenbogensegmente 10 vollständig im Manschettenabschnitt 12 aufgenommen. Die Seitenbogensegmente 10 sind mit dem Zentralbogensegment 9 im vorliegenden Ausführungsbeispiel jeweils mit Hilfe von zwei durchgehenden Verbindungsnähten 20 vernäht, wobei jeweils die zwei durchgehenden Verbindungsnähte 20 von einem der seitlichen Überlappungsbereiche 13 quer zur Längsbogenachse 7 in den zentralen Überlappungsbereich 11 verlaufen. Innerhalb des zentralen Überlappungsbereichs 11 verlaufen die jeweils zwei durchgehenden Verbindungsnähte 20 zumindest bis zu einem dem Manschettenabschnitt 12 gegenüberliegenden Ende des zentralen Überlappungsbereichs 11 im Wesentlichen parallel zur Längsbogenachse 7, wobei im vorliegenden Ausführungsbeispiel die Verbindungsnähte 20 durchgehend bis zum Ende des Verbindungsbogens 8 verlaufen. In anderen Worten ist der Nahtverlauf der Verbindungsnähte 20 kurvenförmig, da die Verbindungsnähte 20 in den seitlichen Überlappungsbereichen 13, insbesondere in den Seitenabschnitten 5 des Querschnittsprofils 3, quer zur Längsbogenachse 7 verlaufen und dann im Übergang zwischen Manschettenabschnitt 12 und dem angrenzenden Bereich des Zentralbogensegments 9 einen Bogen aufweist, sodass die Verbindungsnähte 20 im zentralen Überlappungsbereich 11 parallel zur Längsbogenachse 7 weiter verlaufen können.

Vorzugsweise umfassen Nähfäden der Verbindungsnähte 20 Polyamid.

Selbstverständlich ist es in alternativen Ausführungsvarianten auch denkbar ausgeschlossen, dass mehr oder weniger als drei Nähte 15 zur Verbindung mit dem Rahmenbalgelement 6 bzw. mehr oder weniger als zwei Verbindungsnähte 20 zur Verbindung der Seitenbogensegmente 10 mit dem Zentralbogensegment 9 vorgesehen sein können.

Durch den Manschettenabschnitt 12 wird ein Nahtverlauf optimiert, da eine Kreuzung von Nähten 15 mit den Verbindungsnähten 20 im Manschettenabschnitt 12 vermieden wird. Weiters verlaufen die Verbindungsnähte 20 exzentrisch im Zentralabschnitt 4, sodass die Verbindungsnähte 20 ein bei einer Umstülpung besonders beanspruchtes Zentrum des Zentralabschnitts 4 nicht durchqueren.

Selbstverständlich ist es in alternativen Ausführungsvarianten durchaus denkbar, dass die Nähte 15 zur Vereinfachung eines Vernähens bzw. eines Nähprozesses auch mit den Verbindungsnähten 20 oder untereinander gekreuzt sein können.

Im vorliegenden Ausführungsbeispiel ist der Verbindungsbogen 8 an seinem dem Manschettenabschnitt 12 abweisenden Ende mittels dreier quer zur Längsbogenachse 7 verlaufenden Nähten mit dem seitlichen Rahmenbalgelement 6 vernäht, wie im Zusammenhang mit Fig. 1c erläutert.

Es sei erwähnt, dass selbstverständlich neben oder anstatt den Nähten 15 bzw. den Verbindungsnähten 20 auch andere Verbindungsmittel zum Einsatz kommen können.

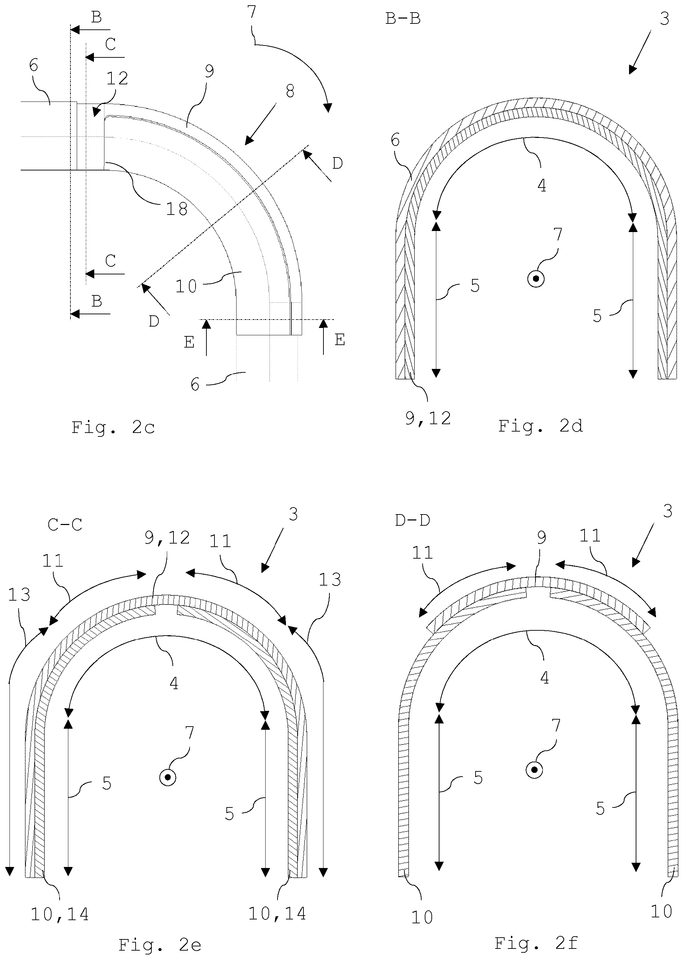

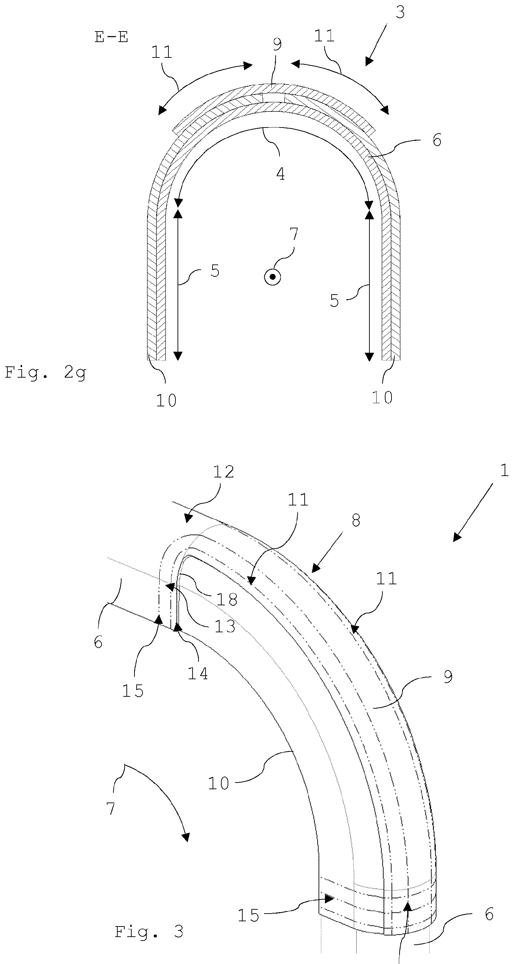

Fig. 2c zeigt eine Seitenansicht der ersten Ausführungsvariante des erfindungsgemäßen Balgelements 1, während Fig. 2d, Fig. 2e, Fig. 2f und Fig. 2g Schnittansichten eines Querschnittsprofils 3 der ersten Ausführungsvariante des erfindungsgemäßen Balgelements 1 an unterschiedlichen Positionen darstellen.

Fig. 2d zeigt eine Schnittansicht des Querschnittsprofils 3 der Verbindung des oberen Rahmenbalgelements 6 mit dem Manschettenbereich 12 des Zentralbogensegments 9 gemäß der in Fig. 2c eingezeichneten Schnittlinie B-B. Hierbei ist das obere Rahmenbalgelement 6 außenliegend und das Zentralbogensegment 9 bzw. der Manschettenabschnitt 12 innenliegend angeordnet, wobei das obere Rahmenbalgelement 6 einen in Längsbogenrichtung 7 über die Seitenbogensegmente 10 hinausragenden Abschnitt des Manschettenabschnitts 12 vollständig umgreift.

Fig. 2e stellt eine Schnittansicht des Querschnittsprofils 3 der Verbindung des Manschettenabschnitts 12 des Zentralbogensegments 9 mit den Seitenbogensegmenten 10 gemäß der in Fig. 2c eingezeichneten Schnittlinie C-C dar. Hierbei handelt es sich um eine Darstellung des Querschnittsprofils 3 im Bereich des Manschettenabschnittes 12, wobei das Zentralbogensegment 9 bzw. der Manschettenabschnitt 12 außenliegend und die Seitenbogensegmente 10 innenliegend angeordnet sind. Da der Manschettenabschnitt 12 den Endabschnitt 14 der Seitenbogensegmente 10 vollständig überdeckt bzw. der Endabschnitt 14 der jeweiligen Seitenbogensegmente 10 im vorliegenden Ausführungsbeispiel vollständig im Manschettenabschnitt 12 aufgenommen ist, sind die seitlichen Überlappungsbereiche 13 maximiert.

Zusammengefasst kann gesagt werden, dass in Fig. 2d und Fig. 2e der Manschettenabschnitt 12 einerseits das obere Rahmenbalgelement 6 und andererseits die Seitenbogensegmente 10 überlappt, wobei von außen nach innen angegeben das obere Rahmenbalgelement 6 eine Außenlage bildet, das Zentralbogensegment 9 samt Manschettenabschnitt 12 eine Mittellage und die Seitenbogensegmente 10 eine Innenlage. Weiters zeigt der Vergleich der Schnitte, dass die Seitenbogensegmente 10 in Richtung der Längsbogenachse 7 nicht bis in das obere Rahmenbalgelement 6 hineinragen, so dass es zu keiner dreifachen Überlappung von Außenlage, Mittellage und Innenlage kommt.

Fig. 2f zeigt eine Schnittansicht des Querschnittsprofils 3 der Verbindung des zentralen Bogensemgents 9 mit den Seitenbogensegmenten 10 gemäß der in Fig. 2c eingezeichneten Schnittlinie D-D. In dieser Darstellung ist der zentrale Überlappungsbereich 11, der aus einem ersten und zweiten zentralen Überlappungsbereich 11 besteht, erkennbar. Im zentralen Überlappungsbereich 11 ist das Zentralbogensegment 9 mit den Seitenbogensegmenten 10 verbunden, wobei das Zentralbogensegment 9 außenliegend und die Seitenbogensegmente 10 innenliegend angeordnet sind.

Fig. 2g stellt eine Schnittansicht des Querschnittsprofils 3 der Verbindung des seitlichen Rahmenbalgelements 6 mit dem Zentralbogensegment 9 und mit den Seitenbogensegmenten 10 gemäß der in Fig. 2c eingezeichneten Schnittlinie E-E dar. Fig. 2g zeigt die der in Fig. 2d dargestellten Verbindung gegenüberliegende Verbindung. D.h. die Verbindung in Fig. 2d ist an einem Ende des Verbindungsbogens 8 und die Verbindung in Fig. 2g am anderen Ende des Verbindungsbogens 8 angeordnet. In Fig. 2g ist erkennbar, dass das Zentralbogensegment 9 außenliegend und das seitliche Rahmenbalgelement 6 innenliegend angeordnet ist. Dazwischen liegen die Seitenbogensegmente 10 in Mittellage. In anderen Worten erfolgt die Anbindung des Verbindungsbogens 8 an das seitliche Rahmenbalgelement 6 wie im Stand der Technik.

Fig. 3 zeigt eine axonometrische Darstellung eines Ausschnittes der Außenseite einer zweiten Ausführungsvariante des erfindungsgemäßen Balgelements 1. Der Aufbau des erfindungsgemäßen Balgelements 1 der zweiten Ausführungsvariante entspricht dem Aufbau des erfindungsgemäßen Balgelements 1 der in den Figuren 2a bis 2g gezeigten ersten Ausführungsvariante mit dem Unterschied, dass das obere Rahmenbalgelement 6 und das Zentralbogensegment 9 einstückig ausgebildet sind. D.h. der Manschettenabschnitt 12 ist in diesem Ausführungsbeispiel durch das obere Rahmenbalgelement 6 ausgebildet. Durch die einstückige Ausbildung von dem oberen Rahmenbalgelement 6 und dem Zentralbogensegment 9 entfallen die Nähte 15 zwischen dem oberen Rahmenbalgelement 6 und dem Zentralbogensegment 9. Auf dem dem Manschettenabschnitt 12 gegenüberliegenden Ende des Verbindungsbogens 8 sind - wie im Stand der Technik - drei Nähte 15 vorgesehen, die quer zur Längsbogenachse 7 verlaufen, um das Zentralbogensegment 9 mit dem seitlichen Rahmenbalgelement 6 zu verbinden.

Im zweiten Ausführungsbeispiel ist demnach im Bereich des Manschettenabschnitts 12 lediglich ein zweilagiger Aufbau vorhanden, da das das Zentralbogensegment 9 samt Manschettenabschnitt 12 ausbildende obere Rahmenbalgelement 6 die Außenlage bilden und die Seitenbogensegmente 10 die Innenlage.

Selbstverständlich sind die Seitenbogensegmente 10 auch in dieser Ausführungsvariante mit dem Zentralbogensegment 9 jeweils mit Hilfe von zwei durchgehenden Verbindungsnähten 20 vernäht, welche sich bis zum seitlichen Rahmenbogenelement 6 hin erstrecken. Der Nahtverlauf der Verbindungsnähte 20 entspricht dabei dem im Zusammenhang mit dem ersten Ausführungsbeispiel beschriebenen Nahtverlauf.

Eine Schnittansicht des Querschnittprofils 3 der Verbindung des Manschettenabschnitts 12 des Zentralbogensemgents 9 mit den Seitenbogensegmenten 10 wird im zweiten Ausführungsbeispiel nicht extra dargestellt, da diese der Fig. 2e entspricht.

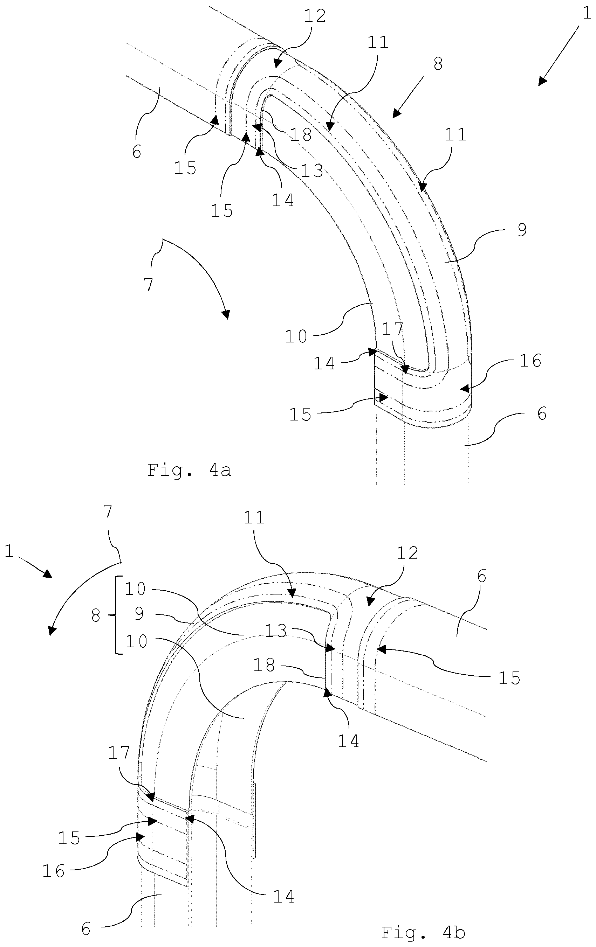

Fig. 4a zeigt eine axonometrische Darstellung eines Ausschnittes der Außenseite einer dritten Ausführungsvariante des erfindungsgemäßen Balgelements 1, während Fig. 4b eine axonometrische Darstellung eines Ausschnittes der Innenseite der dritten Ausführungsvariante des erfindungsgemäßen Balgelements 1 darstellt. Der Aufbau des erfindungsgemäßen Balgelements 1 der dritten Ausführungsvariante entspricht dem Aufbau des erfindungsgemäßen Balgelements 1 der ersten Ausführungsvariante gemäß den Figuren 2a bis 2g mit dem Unterschied, dass das Zentralbogensegment 9 einen weiteren endseitigen Manschettenabschnitt 16 aufweist, welcher weitere Manschettenabschnitt 16 sich in Richtung der Längsbogenachse 7 bis in einen Endabschnitt 14 der Seitenbogensegmente 10 und quer zur Längsbogenachse 7 bis in die Seitenabschnitte 5 des Querschnittsprofils 3 erstreckt, wodurch sich im weiteren Manschettenabschnitt 16 - im Vergleich zum Stand der Technik zusätzliche - weitere seitliche Überlappungsbereiche 17 zwischen den Seitenbogensegmenten 10 und dem Zentralbogensegment 9 ausbilden. Der weitere Manschettenabschnitt 16 und der Manschettenabschnitt 12 sind entlang der Längsbogenachse 7 gesehen an einander entgegengesetzten Enden des Verbindungsbogens 8 angeordnet.

In der dritten Ausführungsvariante sind die Seitenbogensegmente 10 einerseits vollständig im Manschettenabschnitt 12 und andererseits vollständig im weiteren Manschettenabschnitt 16 aufgenommen.

Die Seitenbogensegmente 10 sind in der dritten Ausführungsvariante lediglich mit dem Zentralbogensegment 9 vernäht. Jedes Seitenbogensegment 10 ist mit zwei durchgehenden Verbindungsnähten 20, die von einem der seitlichen Überlappungsbereiche 13 im Manschettenabschnitt 12 quer zur Längsbogenachse 7 über den zentralen Überlappungsbereich 11 parallel zur Längsbogenachse 7 in einen der weiteren seitlichen Überlappungsbereiche 17 im weiteren Manschettenabschnitt 16 quer zur Längsbogenachse 7 verlaufen, mit dem Zentralbogensegment 9 verbunden. Im Vergleich zum im Zusammenhang mit dem ersten und zweiten Ausführungsbeispiel beschriebenen Nahtverlauf, weist der Nahtverlauf der gegenständlichen Ausführungsvariante einen zweiten Bogen am Übergang zwischen weiterem Manschettenabschnitt 16 und dem an den weiteren Manschettenabschnitt 16 angrenzenden Bereich des Zentralbogensegments 9 auf, um die zweite Änderung der Nahtverlaufsrichtung zu erreichen.

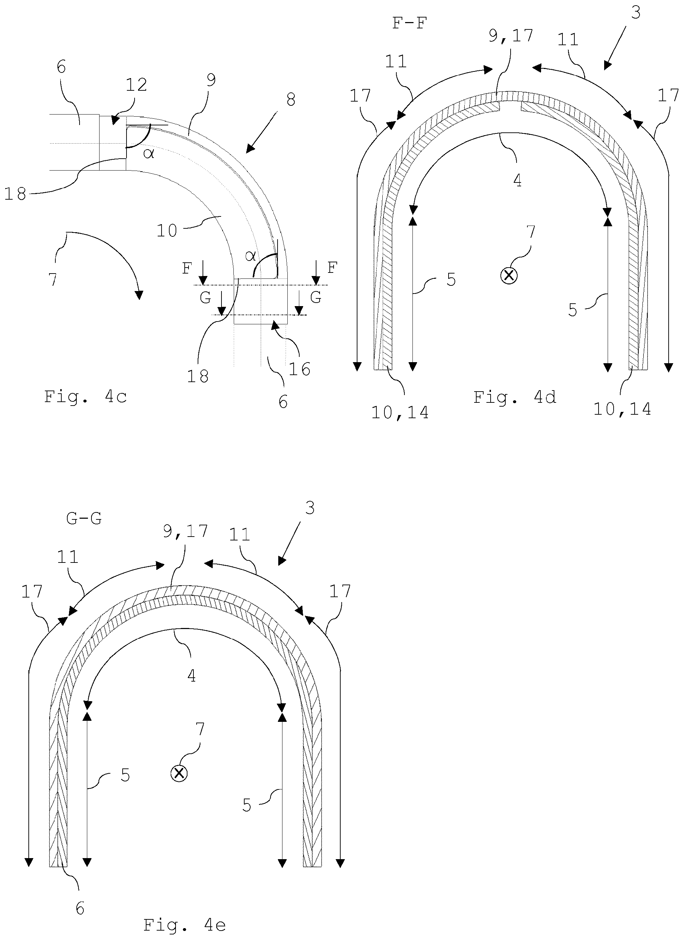

Sowohl das obere Rahmenbalgelemente 6 als auch das seitliche Rahmenbalgelement 6 ist mit zwei Nähten 15 mit dem jeweiligen Manschettenabschnitt 12,16 verbunden. Im Bereich der Nähte 15 überlappen lediglich der Manschettenabschnitt 12 und das obere Rahmenbalgelement 6 bzw. der weitere Manschettenabschnitt 16 und das seitliche Rahmenbalgelement 6 (siehe bspw. Fig. 4b). Ebenfalls ist in Fig. 4b ersichtlich, dass der weitere Manschettenabschnitt 16 einerseits die Seitenbogensegmente 10 außen umgreift und andererseits das seitliche Rahmenbalgelement 6 seitlich umgreift, wobei in beiden Bereichen lediglich eine zweilagige Überlappung vorliegt (vergleiche auch Fig. 4d und 4e).

Durch den weiteren Manschettenabschnitt 16 wird der Nahtverlauf besonders optimiert, da an beiden Enden des Verbindungsbogens 8 die Kreuzung von Nähten 15 in den Manschettenabschnitten 12,16 vermieden wird. Auch in diesem Ausführungsbeispiel verlaufen die Verbindungsnähte 20 exzentrisch im Zentralabschnitt 4, sodass die Verbindungsnähte 20 ein bei der Umstülpung besonders beanspruchtes Zentrum des Zentralabschnitts 4 nicht durchqueren.

Selbstverständlich ist es in alternativen Ausführungsvarianten durchaus denkbar, dass die Nähte 15 zur Vereinfachung eines Vernähens bzw. eines Nähprozesses auch mit den Verbindungsnähten 20 oder untereinander im Bereich des weiteren Manschettenabschnitts 16 gekreuzt sein können.

Fig. 4c zeigt eine Seitenansicht der dritten Ausführungsvariante des erfindungsgemäßen Balgelements 1, während Fig. 4d und Fig. 4e Schnittansichten des Querschnittsprofils 3 der dritten Ausführungsvariante des erfindungsgemäßen Balgelements 1 darstellen.

In Fig. 4c sind weiters zwei Winkel α erkennbar, die jeweils von einer Abschlusskante 18 der Manschettenabschnitte 12,16 und einer Tangent der Längsbogenachse 7 eingeschlossen werden. In diesem Ausführungsbeispiel betragen die Winkel α jeweils 90°, es wäre aber vorstellbar, dass die Winkel α Werte von zwischen 45° und 135° aufweisen. Wenngleich die Winkel α lediglich im Zusammenhang mit diesem Ausführungsbeispiel explizit erwähnt werden, lassen sich diese Winkel α in allen Ausführungsbeispielen entsprechend variieren, auch wenn lediglich ein Manschettenabschnitt 12 vorhanden ist.

Fig. 4d zeigt eine Schnittansicht des Querschnittsprofils 3 der Verbindung eines weiteren Manschettenabschnitts 16 des Zentralbogensegments 9 mit den Seitenbogensegmenten 10 gemäß der in Fig. 4c eingezeichneten Schnittlinie F-F. Hierbei handelt es sich um eine Darstellung des Querschnittsprofils 3 im Bereich der weiteren seitlichen Überlappungsbereiche 17, wobei das Zentralbogensegment 9 außenliegend und die Seitenbogensegmente 10 innenliegend angeordnet sind. Somit entspricht der Aufbau der weiteren seitlichen Überlappungsbereiche 17 in Fig. 4d im Wesentlichen dem Aufbau der seitlichen Überlappungsbereiche 13 in Fig. 2e.

Da auch der weitere Manschettenabschnitt 16 den Endabschnitt 14 der Seitenbogensegmente 10 vollständig überdeckt bzw. der Endabschnitt 14 im vorliegenden Ausführungsbeispiel vollständig im weiteren Manschettenabschnitt 16 aufgenommen ist, sind die weiteren seitlichen Überlappungsbereiche 17 maximiert.

Fig. 4e zeigt eine Schnittansicht des Querschnittsprofils 3 der Verbindung des weiteren Manschettenabschnitts 16 des Zentralbogensegments 9 mit dem seitlichen Rahmenbalgelement 6 gemäß der in Fig. 4c eingezeichneten Schnittlinie G-G. Hierbei ist das seitliche Rahmenbalgelement 6 innenliegend und der weitere Manschettenabschnitt 16 des Zentralbogensegments 9 außenliegend angeordnet. Dadurch, dass sich lediglich der weitere Manschettenabschnitt 16 und das seitliche Rahmenbalgelement 6 überlappen, müssen die quer verlaufenden Nähte 15 lediglich zwei Lagen miteinander verbinden.

Zusammengefasst kann gesagt werden, dass in Fig. 4d und Fig. 4e der weitere Manschettenabschnitt 16 des Zentralbogensegments 9 einerseits das seitliche Rahmenbalgelement 6 überlappen und andererseits die Seitenbogensegmente 10 überlappt.

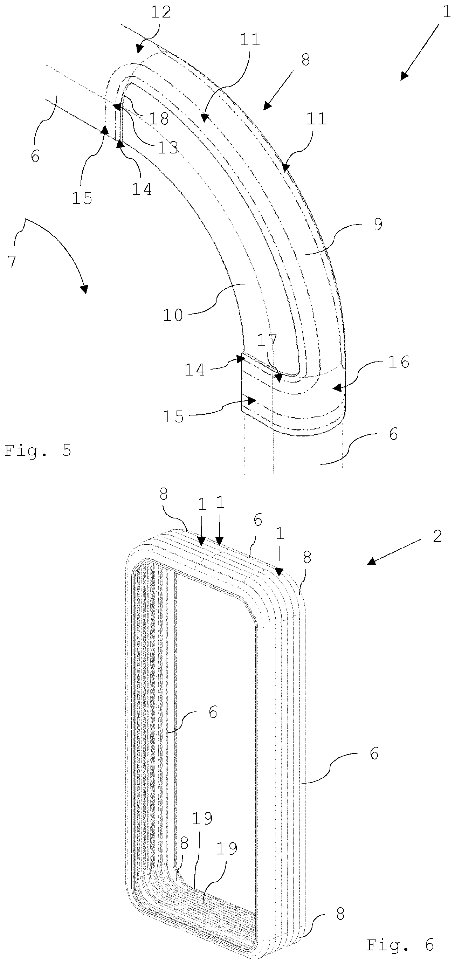

Fig. 5 stellt eine axonometrische Darstellung eines Ausschnittes der Außenseite einer vierten Ausführungsvariante des erfindungsgemäßen Balgelements 1 dar. Der Aufbau der erfindungsgemäßen Balgelements 1 der vierten Ausführungsvariante entspricht einer Kombination der zweiten Ausführungsvariante gemäß Fig. 3, in welcher das Zentralbogensegment 9 und das obere Rahmenbalgelement 6 einstückig ausgeführt sind, und der dritten Ausführungsvariante, in welcher das Zentralbogensegment 9 einen weiteren endseitigen Manschettenabschnitt 16 aufweist, welcher weitere seitliche Überlappungsbereiche 17 ausbildet. Der weitere Manschettenabschnitt 16 und der Manschettenabschnitt 12 sind entlang der Längsbogenachse 7 gesehen an einander entgegengesetzten Enden des Verbindungsbogens 8 angeordnet.

Auch in der vierten Ausführungsvariante sind die Seitenbogensegmente 10 lediglich mit dem Zentralbogensegment 9 vernäht. Jedes Seitenbogensegment 10 ist mit zwei durchgehenden Verbindungsnähten 20, die von einem der seitlichen Überlappungsbereiche 13 im Manschettenabschnitt 12 über den zentralen Überlappungsbereich 11 in einen der weiteren seitlichen Überlappungsbereiche 13 im weiteren Manschettenabschnitt 16 verlaufen, mit dem Zentralbogensegment 9 verbunden. Der Nahtverlauf der Verbindungsnähte 20 entspricht dabei im Wesentlichen dem im Zusammenhang mit dem dritten Ausführungsbeispiel beschriebenen Nahtverlauf.

Aufgrund der einstückigen Ausbildung des Manschettenabschnitts 12 ist lediglich der weitere Manschettenabschnitt 16 mit dem seitlichen Rahmenbalgelement 6 mit zwei Nähten 15 verbunden. Auch in diesem Ausführungsbeispiel wird eine Kreuzung von Nähten vermieden. Die Verbindungsnähte 20 verlaufen exzentrisch im Zentralabschnitt 4, sodass die Verbindungsnähte 20 ein bei der Umstülpung besonders beanspruchtes Zentrum des Zentralabschnitts 4 nicht durchqueren.

Selbstverständlich ist es in alternativen Ausführungsvarianten durchaus denkbar, dass die Nähte 15 zur Vereinfachung eines Vernähens bzw. eines Nähprozesses auch mit den Verbindungsnähten 20 oder untereinander im Bereich des weiteren Manschettenabschnitts 16 gekreuzt sein können.

Schnittansichten des Querschnittprofils 3 der Verbindung des Manschettenabschnitts 12 des Zentralbogensemgents 9 mit den Seitenbogensegmenten 10 sowie des weiteren Manschettenabschnitts 16 des Zentralbogensegments 9 mit den Seitenbogensegmenten 10 sowie mit dem Rahmenbalgelement 6 werden im vierten Ausführungsbeispiel nicht extra dargestellt, da diese den Figuren 2e, 4d und 4e entsprechen.

Fig. 6 stellt eine axonometrische Darstellung eines Balgs 2 umfassend mehrere erfindungsgemäße Balgelemente 1 dar. Jedes erfindungsgemäße Balgelement 1 umfasst in diesem Ausführungsbeispiel vier Rahmenbalgelemente 6, nämlich ein oberes, ein unteres und jeweils zwei seitliche Rahmenbalgelemente 6, wobei jeweils zwei Rahmenbalgelemente 6 mit einem Verbindungsbogen 8, der einen Manschettenabschnitt 12 und wahlweise einen weiteren Manschettenabschnitt 16 umfasst, verbunden sind. Zwei aneinandergrenzende erfindungsgemäße Balgelemente 1 sind mit Hilfe von Verbindungselementen 19, vorzugsweise mit Hilfe einer oder mehrerer Klemmleisten, verbunden. Der Übersichtlichkeit halber sind lediglich drei der Balgelemente 1 mit einem Bezugszeichen versehen bzw. sind nur in einem der Balgelemente 1 die Rahmenbalgelemente 6 und die Verbindungsbögen 8 mit Bezugszeichen versehen. Zusätzlich sind aus denselben Gründen lediglich die beiden Verbindungselemente 19, die die drei Balgelemente 1 verbinden, mit Bezugszeichen versehen.

Aufgrund der Tatsache, dass die Verbindungsbögen 8 Zentralbogensegmente 9 mit zumindest einem Manschettenabschnitt 12,16 aufweisen, verlaufen jeweils durchgehende Verbindungsnähte 20 von einem der seitlichen Überlappungsbereiche 13 über den zentralen Überlappungsbereich 11 in einen der weiteren seitlichen Überlappungsbereiche 17. Dadurch ist das erfindungsgemäße Balgelement 1 besonders langlebig, da in den höchstbelasteten Bereichen des erfindungsgemäßen Balgelements 1 die Anzahl der Nähte 15 auf ein Minimum reduziert wird.

Zusätzlich wird - bezogen auf das Querschnittsprofil 3 - durch die Verwendung der Manschettenabschnitte 12,16 die Dicke der Überlappungsbereiche reduziert wird, da sich jeweils lediglich zwei Lagen des erfindungsgemäßen Balgelements 1 überlappen.

Wenngleich in den Figuren 2a bis 5 lediglich ein zwei Rahmenbalgelemente 6 und einen Verbindungsbogen 8 zeigenden Ausschnitt darstellen, versteht es sich von selbst, dass zwei, drei oder vier Verbindungsbögen 8 im Balgelement 1 wie beschrieben ausgebildet sind. Darüberhinaus ist es auch denkbar, dass die exemplarisch beschriebenen vier unterschiedlichen Ausführungsbeispiele beliebig miteinander kombinierbar sind: So kann beispielsweise ein Balgelement 1 zwei Verbindungsbögen 8 gemäß dem vierten Ausführungsbeispiel zur Verbindung des oberen Rahmenbalgelements 6 mit den seitlichen Rahmenbalgelementen 6 aufweisen und zwei Verbindungsbögen 8 gemäß dem ersten Ausführungsbeispiel zur Verbindung der seitlichen Rahmenbalgelemente 6 mit dem unteren Rahmenbalgelement 6.

### BEZUGSZEICHENLISTE

- 1: Balgelement
- 2: Balg
- 3: Querschnittsprofil
- 4: Zentralabschnitt
- 5: Seitenabschnitt
- 6: Rahmenbalgelement
- 7: Längsbogenachse
- 8: Verbindungsbogen
- 9: Zentralbogensegment
- 10: Seitenbogensegment
- 11: zentraler Überlappungsbereich
- 12: Manschettenabschnitt
- 13: zusätzlicher seitlicher Überlappungsbereich
- 14: Endabschnitt
- 15: Naht
- 16: weiterer Manschettenabschnitt
- 17: weiterer zusätzlicher seitlicher Überlappungsbereich
- 18: Abschlusskante
- 19: Verbindungselement
- 20: Verbindungsnaht

- α: Winkel

## Patentansprüche

1. Balgelement (1) eines Balgs (2) zur Ausbildung eines tunnelförmigen Übergangsschutzes zwischen zwei gelenkig miteinander verbundenen Fahrzeuggliedern,
wobei das Balgelement (1) zumindest abschnittsweise ein halbseitig offenes Querschnittsprofil (3) aufweist, welches Querschnittsprofil (3) einen Zentralabschnitt (4) und zwei einander gegenüberliegende vom Zentralabschnitt (4) abragende Seitenabschnitte (5) umfasst,
wobei das Balgelement (1) mehrere Rahmenbalgelemente (6) umfasst, welche Rahmenbalgelemente (6) rahmenartig miteinander verbunden sind, wobei zwischen jeweils zwei Rahmenbalgelementen (6) ein die beiden Rahmenbalgelemente (6) entlang einer Längsbogenachse (7) miteinander verbindender Verbindungsbogen (8) ausgebildet ist,
wobei die Verbindungsbögen (8) jeweils ein Zentralbogensegment (9) und zwei am
Zentralbogensegment (9) befestigte Seitenbogensegmente (10) umfassen,
wobei das Zentralbogensegment (9) im Zentralabschnitt (4) des halbseitig offenen Querschnittsprofils (3) verläuft und die zwei Seitenbogensegmente (10) in den Seitenabschnitten (5) verlaufen, wobei sich das Zentralbogensegment (9) und die zwei Seitenbogensegmente (10) in einem zentralen Überlappungsbereich (11) überlappen,
**dadurch gekennzeichnet, dass**
zumindest einer der Verbindungsbögen (8) ein Zentralbogensegment (9) mit einem endseitig angeordneten Manschettenabschnitt (12) aufweist, wobei sich der Manschettenabschnitt (12) bis in die Seitenabschnitte (5) des halbseitig offenen Querschnittsprofils (3) erstreckt, sodass sich im Manschettenabschnitt (12) zusätzliche seitliche Überlappungsbereiche (13) zwischen den Seitenbogensegmenten (10) und dem Zentralbogensegment (9) ausbilden.

2. Balgelement (1) nach Anspruch 1, **dadurch gekennzeichnet, dass** der Manschettenabschnitt (12) einen Endabschnitt (14) der Seitenbogensegmente (10) vollständig überdeckt.

3. Balgelement (1) nach einem der Ansprüche 1 bis 2, **dadurch gekennzeichnet, dass** zumindest in den zusätzlichen seitlichen Überlappungsbereichen (13) bezogen auf das halbseitig offenen Querschnittsprofil (3) das Zentralbogensegment (9) außenliegend angeordnet ist und die Seitenbogensegmente (10) innenliegend angeordnet sind.

4. Balgelement (1) nach einem der Ansprüche 1 bis 3, **dadurch gekennzeichnet, dass** die Seitenbogensegmente (10) mit dem Zentralbogensegment (9) vernäht sind, wobei jeweils zumindest eine Verbindungsnaht (20) von einem der zusätzlichen seitlichen Überlappungsbereiche (13) in den zentralen Überlappungsbereich (11) verläuft.

5. Balgelement (1) nach einem der Ansprüche 1 bis 4, **dadurch gekennzeichnet, dass** eines der Rahmenbalgelemente (6) und das Zentralbogensegment (9) einstückig ausgebildet sind, wobei der Manschettenabschnitt (12) durch das Rahmenbalgelement (6) ausgebildet ist.

6. Balgelement (1) nach einem der Ansprüche 1 bis 4, **dadurch gekennzeichnet, dass** die Rahmenbalgelemente (6) und das Zentralbogensegment (9) mehrstückig ausgebildet sind, wobei sich zumindest eines der Rahmenbalgelemente (6) und das Zentralbogensegment (9) überlappen.

7. Balgelement (1) nach Anspruch 6, **dadurch gekennzeichnet, dass** im Manschettenabschnitt (12) bezogen auf das halbseitig offene Querschnittsprofil (3) eines der Rahmenbalgelemente (6) außenliegend angeordnet ist und das Zentralbogensegment (9) innenliegend angeordnet ist.

8. Balgelement (1) nach einem der Ansprüche 1 bis 7, **dadurch gekennzeichnet, dass** das den endseitig angeordneten Manschettenabschnitt (12) aufweisende Zentralbogensegment (9) einen weiteren endseitigen Manschettenabschnitt (16) aufweist, welcher weitere Manschettenabschnitt (16) weitere zusätzliche seitliche Überlappungsbereiche (17) ausbildet, wobei der Manschettenabschnitt (12) und der weitere Manschettenabschnitt (16) entlang der Längsbogenachse (7) gesehen an einander entgegengesetzten Enden angeordnet sind.

9. Balgelement (1) nach Anspruch 8, **dadurch gekennzeichnet, dass** die Seitenbogensegmente (10) mit dem Zentralbogensegment (9) vernäht sind, wobei jeweils zumindest eine Verbindungsnaht (20) von einem der zusätzlichen seitlichen Überlappungsbereiche (13) über den zentralen Überlappungsbereich (11) in einen der weiteren zusätzlichen Überlappungsbereiche (17) verläuft.

10. Balgelement (1) nach einem der Ansprüche 1 bis 9, **dadurch gekennzeichnet, dass** die Rahmenbalgelemente (6), das zumindest eine Zentralbogensegment (9) und die Seitenbogensegmente (10) jeweils ein mit einem Elastomer beschichtetes Gewebe umfassen.

11. Balgelement (1) nach Anspruch 10, **dadurch gekennzeichnet, dass** es sich bei dem Elastomer um chlorsulfoniertes Polyethylen (CSM) oder um Silikone handelt.

12. Balgelement (1) nach einem der Ansprüche 1 bis 11, **dadurch gekennzeichnet, dass** eine Abschlusskante (18) des Manschettenabschnitts (12) und eine Tangente der Längsbogenachse (7) einen Winkel (α) von zwischen 45° und 135°, bevorzugt von zwischen 90° und 120°, einschließen.

13. Balgelement (1) nach einem der Ansprüche 1 bis 12, **dadurch gekennzeichnet, dass** die Rahmenbalgelemente (6), das zumindest eine Zentralbogensegment (9) und die Seitenbogensegmente (10), vorzugsweise mit Nähfäden aus Polyamid (PA), vernäht sind.

14. Balgelement (1) nach einem der Ansprüche 1 bis 13, **dadurch gekennzeichnet, dass** zumindest zwei an ein Rahmenbalgelement (6) angrenzende Verbindungsbögen (8), vorzugsweise zwei oder vier Verbindungsbögen (8) des Balgelements (1), jeweils ein Zentralbogensegment (9) mit zumindest einem endseitig angeordneten Manschettenabschnitt (12,16) aufweisen.

15. Balg (2) zur Ausbildung eines tunnelförmigen Übergangsschutzes zwischen zwei gelenkig miteinander verbundenen Fahrzeuggliedern, welcher Balg (2) mehrere Balgelemente (1) nach einem der Ansprüche 1 bis 14 umfasst, wobei jeweils zwei aneinandergrenzende Balgelemente (1) miteinander mittels Verbindungselementen (19) verbunden sind.

## Claims

1. Bellows element (1) of a bellows (2) for forming a tunnel-shaped transition protection between two vehicle members interconnected in an articulated manner, wherein the bellows element (1) comprises, at least in sections, a cross-sectional profile (3) which is open at one side, which cross-sectional profile (3) comprises a central section (4) and two mutually opposite side sections (5) projecting from the central section (4),
wherein the bellows element (1) comprises a plurality of frame bellows elements (6), which frame bellows elements (6) are connected to one another in a frame-like manner, wherein a connecting arch (8) connecting two frame bellows elements (6) to one another along a longitudinal arch axis (7) is formed between every two frame bellows elements (6),
wherein the connecting arches (8) each comprise a central arch segment (9) and two side arch segments (10) fastened to the central arch segment (9), wherein the central arch segment (9) extends in the central section (4) of the cross-sectional profile (3) which is open at one side and the two side arch segments (10) extend in the side sections (5), wherein the central arch segment (9) and the two side arch segments (10) overlap in a central overlap region (11),
**characterized in that**
at least one of the connecting arches (8) has a central arch segment (9) with a sleeve section (12) arranged at the end, wherein the sleeve section (12) extends up into the side sections (5) of the cross-sectional profile (3) which is open at one side, so that additional lateral overlap regions (13) are formed in the sleeve section (12) between the side arch segments (10) and the central arch segment (9).

2. Bellows element (1) according to claim 1, **characterized in that** the sleeve section (12) completely covers an end section (14) of the side arch segments (10).

3. Bellows element (1) according to one of claims 1 to 2, **characterized in that** the central arch segment (9) is arranged on the outside and the side arch segments (10) are arranged on the inside, with respect to the cross-sectional profile (3) which is open at one side, at least in the additional lateral overlap regions (13).

4. Bellows element (1) according to one of the claims 1 to 3, **characterized in that** the side arch segments (10) are sewn to the central arch segment (9), wherein in each case at least one connecting seam (20) extends from one of the additional lateral overlap regions (13) into the central overlap region (11).

5. Bellows element (1) according to one of claims 1 to 4, **characterized in that** one of the frame bellows elements (6) and the central arch segment (9) are integrally formed, wherein the sleeve section (12) is formed by the frame bellows element (6).

6. Bellows element (1) according to one of claims 1 to 4, **characterized in that** the frame bellows elements (6) and the central arch segment (9) are formed in multiple pieces, wherein at least one of the frame bellows elements (6) and the central arch segment (9) overlap.

7. Bellows element (1) according to claim 6, **characterized in that** in the sleeve section (12) one of the frame bellows elements (6) is arranged on the outside and the central arch segment (9) is arranged on the inside, with respect to the cross-sectional profile (3) which is open at one side.

8. Bellows element (1) according to one of claims 1 to 7, **characterized in that** the central arch segment (9) having the sleeve section (12) arranged at the end side comprises a further end-side sleeve section (16), which further sleeve section (16) forms further additional lateral overlap regions (17), wherein the sleeve section (12) and the further sleeve section (16) are arranged at mutually opposite ends, as seen along the longitudinal arch axis (7).

9. Bellows element (1) according to claim 8, **characterized in that** the side arch segments (10) are sewn to the central arch segment (9), wherein in each case at least one connecting seam (20) extends from one of the additional lateral overlap regions (13) over the central overlap region (11) into one of the further additional overlap regions (17).

10. Bellows element (1) according to one of claims 1 to 9, **characterized in that** the frame bellows elements (6), the at least one central arch segment (9) and the side arch segments (10) each comprise a fabric coated with an elastomer.

11. Bellows element (1) according to claim 10, **characterized in that** the elastomer is chlorosulfonated polyethylene (CSM) or silicones.

12. Bellows element (1) according to one of claims 1 to 11, **characterized in that** a terminal edge (18) of the sleeve section (12) and a tangent of the longitudinal arch axis (7) enclose an angle (α) of between 45° and 135°, preferably of between 90° and 120°.

13. Bellows element (1) according to one of claims 1 to 12, **characterized in that** the frame bellows elements (6), the at least one central arch segment (9) and the side arch segments (10) are sewn, preferably with sewing threads made of polyamide (PA).

14. Bellows element (1) according to one of claims 1 to 13, **characterized in that** at least two connecting arches (8) adjacent to a frame bellows element (6), preferably two or four connecting arches (8) of the bellows element (1), each have a central arch segment (9) having at least one sleeve section (12, 16) arranged at the end side.

15. Bellows (2) for forming a tunnel-shaped transition protection between two vehicle members interconnected in an articulated manner, which bellows (2) comprises a plurality of bellows elements (1) according to one of claims 1 to 14, wherein in each case two adjacent bellows elements (1) are connected to one another by means of connecting elements (19).

## Revendications

1. Élément de soufflet (1) d'un soufflet (2) destiné à former une protection de transition en forme de tunnel entre deux organes de véhicule reliés l'un à l'autre de manière articulée,
dans lequel l'élément de soufflet (1) présente, au moins sur certaines parties, un profil de section transversale (3) semi-ouvert, lequel profil de section transversale (3) comprend une partie centrale (4) et deux parties latérales (5) se faisant face et partant de la partie centrale (4), dans lequel l'élément de soufflet (1) comprend une pluralité d'éléments de soufflet de cadre (6), lesquels éléments de soufflet de cadre (6) sont reliés les uns aux autres à la manière d'un cadre, dans lequel entre chaque fois deux éléments de soufflet de cadre (6) est formé un coude de liaison (8) reliant les deux éléments de soufflet de cadre (6) l'un à l'autre le long d'un axe longitudinal de coude (7), dans lequel les coudes de liaison (8) comprennent chacun un segment de coude central (9) et deux segments de coude latéraux (10) fixés au segment de coude central (9),
dans lequel le segment de coude central (9) s'étend dans la partie centrale (4) du profil de section transversale semi-ouvert (3) et les deux segments de coude latéraux (10) s'étendent dans les parties latérales (5), le segment de coude central (9) et les deux segments de coude latéraux (10) se chevauchant dans une zone de chevauchement centrale (11),
**caractérisé en ce**
**qu'**au moins un des coudes de liaison (8) présente un segment de coude central (9) avec une partie manchon (12) disposée à une extrémité, la partie manchon (12) s'étendant jusque dans les parties latérales (5) du profil de section transversale semi-ouvert (3), de sorte que des zones de chevauchement latérales supplémentaires (13) sont formées dans la partie manchon (12) entre les segments de coude latéraux (10) et le segment de coude central (9).

2. Élément de soufflet (1) selon la revendication 1, **caractérisé en ce que** la partie manchon (12) recouvre complètement une partie d'extrémité (14) des segments de coude latéraux (10).

3. Élément de soufflet (1) selon l'une des revendications 1 à 2, **caractérisé en ce qu'**au moins dans les zones de chevauchement latérales supplémentaires (13), par rapport au profil de section transversale semi-ouvert (3), le segment de coude central (9) est disposé extérieurement et les segments de coude latéraux (10) sont disposés intérieurement.

4. Élément de soufflet (1) selon l'une des revendications 1 à 3, **caractérisé en ce que** les segments de coude latéraux (10) sont cousus avec le segment de coude central (9), au moins une couture de liaison (20) s'étendant à chaque fois de l'une des zones de chevauchement latérales supplémentaires (13) dans la zone de chevauchement centrale (11).

5. Élément de soufflet (1) selon l'une des revendications 1 à 4, **caractérisé en ce que** l'un des éléments de soufflet de cadre (6) et le segment de coude central (9) sont formés d'une seule pièce, la partie manchon (12) étant formée par l'élément de soufflet de cadre (6).

6. Élément de soufflet (1) selon l'une des revendications 1 à 4, **caractérisé en ce que** les éléments de soufflet de cadre (6) et le segment de coude central (9) sont formés de plusieurs pièces, au moins un des éléments de soufflet de cadre (6) et le segment de coude central (9) se chevauchant.

7. Élément de soufflet (1) selon la revendication 6, **caractérisé en ce que** dans la partie manchon (12), par rapport au profil de section transversale semi-ouvert (3), l'un des éléments de soufflet de cadre (6) est disposé extérieurement et le segment de coude central (9) est disposé intérieurement.

8. Élément de soufflet (1) selon l'une des revendications 1 à 7, **caractérisé en ce que** le segment de coude central (9) avec la partie manchon (12) disposée à une extrémité présente une autre partie manchon (16) à une extrémité, laquelle autre partie manchon (16) forme d'autres zones de chevauchement latérales supplémentaires (17), la partie manchon (12) et l'autre partie manchon (16), vues le long de l'axe longitudinal de coude (7), étant disposées à des extrémités opposées l'une à l'autre.

9. Élément de soufflet (1) selon la revendication 8, **caractérisé en ce que** les segments de coude latéraux (10) sont cousus avec le segment de coude central (9), au moins une couture de liaison (20) s'étendant à chaque fois de l'une des zones de chevauchement latérales supplémentaires (13) à l'une des autres zones de chevauchement supplémentaires (17) en passant par la zone de chevauchement centrale (11).

10. Élément de soufflet (1) selon l'une des revendications 1 à 9, **caractérisé en ce que** les éléments de soufflet de cadre (6), ledit au moins un segment de coude central (9) et les segments de coude latéraux (10) comprennent chacun un tissu enduit d'un élastomère.

11. Élément de soufflet (1) selon la revendication 10, **caractérisé en ce que** l'élastomère est du polyéthylène chlorosulfoné (CSM) ou des silicones.

12. Élément de soufflet (1) selon l'une des revendications 1 à 11, **caractérisé en ce qu'**un bord terminal (18) de la partie manchon (12) et une tangente à l'axe longitudinal de coude (7) forment un angle (a) compris entre 45° et 135°, de préférence entre 90° et 120°.

13. Élément de soufflet (1) selon l'une des revendications 1 à 12, **caractérisé en ce que** les éléments de soufflet de cadre (6), ledit au moins un segment de coude central (9) et les segments de coude latéraux (10) sont cousus de préférence avec des fils de couture en polyamide (PA).

14. Élément de soufflet (1) selon l'une des revendications 1 à 13, **caractérisé en ce qu'**au moins deux coudes de liaison (8) adjacents à un élément de soufflet de cadre (6), de préférence deux ou quatre coudes de liaison (8) de l'élément de soufflet (1), présentent chacun un segment de coude central (9) avec au moins une partie manchon (12, 16) disposée à l'extrémité.

15. Soufflet (2) destiné à former une protection de transition en forme de tunnel entre deux organes de véhicule reliés l'un à l'autre de manière articulée, lequel soufflet (2) comprend plusieurs éléments de soufflet (1) selon l'une des revendications 1 à 14, dans lequel chaque fois deux éléments de soufflet adjacents (1) sont reliés l'un à l'autre au moyen d'éléments de liaison (19).
